# EUROPEAN PATENT APPLICATION

(11) **EP 3 578 621 A1**
(43) Date of publication of application: **11.12.2019**
(21) Application number: 18748475.3
(22) Date of filing: 01.02.2018
(51) Int. Cl.: C09K 3/18

(54) **WATER-REPELLENT AGENT, WATER-REPELLENT STRUCTURE, AND PRODUCTION METHOD FOR SAID STRUCTURE**

(30) Priority: 02.02.2017 WO PCT/JP2017/003862
(71) Applicant: Hitachi Chemical Company, Ltd., Chiyoda-ku Tokyo 100-6606 (JP)
(72) Inventor: KOTAKE Tomohiko, Tokyo 100-6606 (JP); MAKINO Tatsuya, Tokyo 100-6606 (JP); IWANAGA Kouta, Tokyo 100-6606 (JP)
(74) Representative: Hoffmann Eitle
(86) International application number: PCT/JP2018/003441
(87) International publication number: WO 2018/143356

(57) **Abstract**

The present invention relates to a water-repellent agent comprising a condensation product of a liquid composition comprising at least one selected from the group consisting of a polysiloxane compound having a hydrolyzable functional group or a condensable functional group and a hydrolyzate of the polysiloxane compound having a hydrolyzable functional group.

## Description

### Technical Field

The present invention relates to a water-repellent agent, water-repellent structure, and a production method therefor.

### Background Art

Conventionally, imparting a water-repelling performance to a base material having transparency, such as glass and plastic products, has been required for many products in order to minimize adhesion of water droplets and to ensure visibility. Usually, the water-repelling performance is obtained by forming a film (hereinafter, also referred to as a "water-repellent film") on the surface of a base material with a coating material excellent in water repellency. The term water-repellent film generally means a film having a contact angle of water of 90 degrees or more.

As a material for forming such a water-repellent film, for example, polytetrafluoroethylene (PTFE) and derivatives thereof are known.

In addition, formation of a water-repellent film using fluoroalkylsilane is known (see, e.g., Patent Literature 1 and Patent Literature 2).

### Citation List

### Patent Literature

Patent Literature 1: Japanese Unexamined Patent Publication No. 2002-105661
Patent Literature 2: Japanese Unexamined Patent Publication No. 2000-81214

### Summary of Invention

### Technical Problem

It is noted that the water-repellent agent to be used to impart water-repelling performance to the surface to be treated of the target object is required to be excellent in water repellency.

The present invention has been made in view of the above-described circumstances, and an object thereof is to provide a water-repellent agent capable of imparting excellent water repellency to a surface to be treated of a target object and a water-repellent structure using the water-repellent agent. The present invention also provides a method for producing the above water-repellent structure.

### Solution to Problem

As a result of intensive studies to achieve the above object, the present inventors discovered a water-repellent agent obtained by using a liquid composition comprising a polysiloxane compound having a reactive group (hydrolyzable functional group or condensable functional group) in the molecule exhibits excellent water repellency, based on which the present invention has been completed.

The present invention provides a water-repellent agent, the water-repellent agent comprising a condensation product of a liquid composition comprising at least one selected from the group consisting of a polysiloxane compound having a hydrolyzable functional group or a condensable functional group and a hydrolyzate of the polysiloxane compound having a hydrolyzable functional group. Further, the present invention provides a water-repellent agent, the water-repellent agent comprising a liquid composition comprising at least one selected from the group consisting of a polysiloxane compound having a hydrolyzable functional group or a condensable functional group and a hydrolyzate of the polysiloxane compound having a hydrolyzable functional group. Such a water-repellent agent can impart excellent water repellency to the surface to be treated of the target object. In addition, the water-repellent portion formed from the water-repellent agent is also excellent in adhesiveness with the surface to be treated.

In the above-mentioned water-repellent agent, the liquid composition may further comprise silica particles. Such a water-repellent agent is even better in water repellency and adhesiveness.

The number of silanol groups per g of the silica particles may be 10×10¹⁸ to 1000×10¹⁸ groups/g. This enables a water-repellent portion having even better water repellency and adhesiveness to be formed at a low temperature and in a short time.

When the condensable functional group is a hydroxyalkyl group, examples of the polysiloxane compound include a compound represented by the following formula (A). This enables even better water repellency and adhesiveness to be achieved. 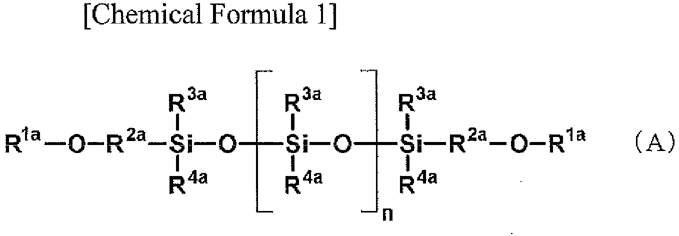 [wherein R^{1a} represents a hydroxyalkyl group, R^{2a} represents an alkylene group, R^{3a} and R^{4a} each independently represent an alkyl group or an aryl group, and n represents an integer of 1 to 50.]

When the hydrolyzable functional group is an alkoxy group, examples of the polysiloxane compound include a compound represented by the following formula (B). This enables even better water repellency and adhesiveness to be achieved. 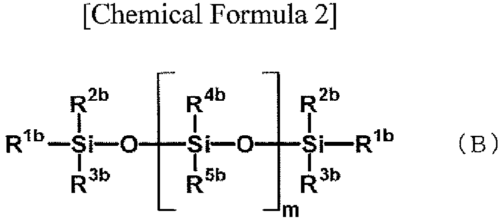 [wherein R^{1b} represents an alkyl group, an alkoxy group or an aryl group, R^{2b} and R^{3b} each independently represent an alkoxy group, R^{4b} and R^{5b} each independently represent an alkyl group or an aryl group, and m represents an integer of 1 to 50.]

In the above-mentioned water-repellent agent, the liquid composition may further comprise at least one selected from the group consisting of a silane monomer having a hydrolyzable functional group or a condensable functional group, and a hydrolyzate of the silane monomer having a hydrolyzable functional group. This enables even better water repellency and adhesiveness to be achieved.

In the above-mentioned water-repellent agent, the liquid composition may further comprise aerogel particles. As a result, water repellency is further improved.

The above-mentioned water-repellent agent may be used to form a water-repellent portion on a surface to be treated of the target object. By forming such a water-repellent portion, even better water repellency can be achieved. At this time, the water-repellent portion may contain an aerogel.

The present invention also provides a water-repellent agent, comprising a water-repellent component having, in a solid ²⁹Si-NMR spectrum as measured by using the DD/MAS method, when the silicon-containing bonding units Q, T, and D are defined as follows, a ratio Q+T:D between the signal area derived from Q and T and the signal area derived from D of 1:0.01 to 1:0.70. Such a water-repellent agent is excellent in water repellency and adhesiveness.
Q: A silicon-containing bonding unit comprising four oxygen atoms that are bonded to one silicon atom;
T: A silicon-containing bonding unit comprising three oxygen atoms and one hydrogen atom or one monovalent organic group that are bonded to one silicon atom; and
D: A silicon-containing bonding unit comprising two oxygen atoms and two hydrogen atoms or two monovalent organic groups that are bonded to one silicon atom,
[wherein the organic group is a monovalent organic group in which an atom bonded to the silicon atom is a carbon atom.]

In addition, the present invention provides a water-repellent agent comprising a water-repellent component comprising a compound having a structure represented by the following formula (1). Such a water-repellent agent is excellent in water repellency and adhesiveness. 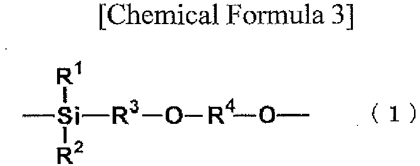 [wherein R¹ and R² each independently represent an alkyl group or an aryl group, and R³ and R⁴ each independently represent an alkylene group.]

Still further, the present invention provides a water-repellent agent comprising a water-repellent component having a ladder structure comprising a strut portion and a bridge portion, wherein the bridge portion comprises a compound represented by the following formula (2). Such a water-repellent agent has excellent water repellency and durability due to the ladder structure. 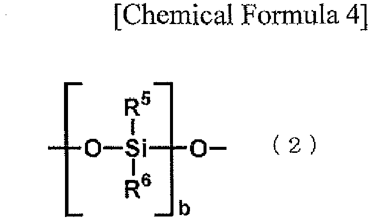 [wherein R⁵ and R⁶ each independently represent an alkyl group or an aryl group, and b represents an integer of 1 to 50.]

Examples of the compound having ladder structure include compounds having a structure represented by the following formula (3). This enables even better water repellency and durability to be achieved. 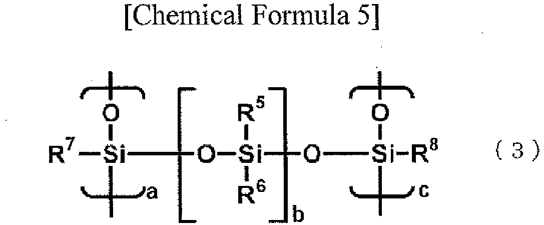 [wherein R⁵, R⁶, R⁷, and R⁸ each independently represent an alkyl group or an aryl group, a and c each independently represent an integer of 1 to 3000, and b represents an integer of 1 to 50.]

The above-mentioned water-repellent portion may comprise an aerogel. Further, the above-mentioned water-repellent component may be an aerogel. This enables even better water repellency to be achieved.

The present invention also provides a water-repellent structure, comprising: a target object; and a water-repellent portion on a surface to be treated of the target object, wherein the water-repellent portion comprises a dried product of the above-mentioned water-repellent agent. By having a water-repellent portion comprising the above-mentioned water-repellent agent or a reaction product of the above-mentioned water-repellent agent, the water-repellent structure is excellent in water repellency, as well as excellent in adhesiveness between the surface to be treated and the water-repellent portion.

The present invention also provides a method for producing a water-repellent structure, the method comprising a step of coating a surface to be treated of a target object with the above-mentioned water-repellent agent.

### Advantageous Effects of Invention

According to the present invention, there can be provided a water-repellent agent capable of imparting excellent water repellency to a surface to be treated of a target object, and a water-repellent structure using the water-repellent agent. According to the present invention, there can also be provided a method for producing the water-repellent structure.

### Brief Description of Drawings

[Figure 1] Figure 1 is a diagram illustrating a method of calculating a two-axis average primary particle size of particles.
[Figure 2] Figure 2 is a diagram illustrating a solid ²⁹Si-NMR spectrum of a water-repellent component contained in a water-repellent agent 12 measured by using a DD/MAS method.
[Figure 3] Figure 3 is a diagram schematically illustrating a water-repellent structure according to an embodiment of the present invention.
[Figure 4] Figure 4 is a diagram schematically illustrating a water-repellent structure according to an embodiment of the present invention.
[Figure 5] Figure 5 is a diagram schematically illustrating a water-repellent structure according to an embodiment of the present invention.

### Description of Embodiments

Hereinafter, preferred embodiments of the present invention will be described in detail with reference to the drawings as needed. However, the present invention is not limited to the following embodiments.

### <Definitions>

As used herein, a numerical range indicated by using "to" indicates a range including the numerical values described before and after the "to" as the minimum value and the maximum value, respectively. In numerical ranges described in stages as used herein, the upper limit or lower limit of the numerical range of one stage may be replaced with the upper limit or lower limit of the numerical range of another stage. In the numerical ranges described herein, the upper limit value or the lower limit value of the numerical range may be replaced with a value shown in the Examples. "A or B" may contain either A or B, or may contain both. The materials exemplified herein can be used singly or in combination of two or more unless otherwise specified. As used herein, when a plurality of substances corresponding to each component is present in the composition, unless otherwise specified, the content of each component in the composition means the total amount of the plurality of substances present in the composition.

### <Water-repellent agent>

Examples of the water-repellent agent of the present embodiment include the following first to fourth aspects. By employing each aspect, it is possible to obtain water repellency and adhesiveness according to each aspect.

### (First Aspect)

The water-repellent agent according to one embodiment includes a condensation product of a liquid composition containing at least one selected from the group consisting of a polysiloxane compound having a hydrolyzable functional group or a condensable functional group (in the molecule) and a hydrolyzate of the polysiloxane compound having a hydrolyzable functional group (hereinafter, sometimes referred to as "polysiloxane compound group"). The water-repellent agent may also include a liquid composition containing at least one selected from the group consisting of a polysiloxane compound having a hydrolyzable functional group or a condensable functional group and a hydrolyzate of the polysiloxane compound having a hydrolyzable functional group (the water-repellent agent may be the liquid composition). Such a water-repellent agent can impart excellent water repellency to a surface to be treated of a target object. The above-mentioned water-repellent agent may be used to form a water-repellent portion on a surface to be treated of the target object. The water-repellent portion formed from the above-mentioned water-repellent agent has excellent water repellency and also has excellent adhesiveness to the surface to be treated. The water-repellent portion may include, for example, at least one of a film-like water-repellent portion (hereinafter, also referred to as a "water-repellent film") and a particulate water-repellent portion (hereinafter, also referred to as "water-repellent particles"). More specifically, the water-repellent agent according to the present embodiment may form a water-repellent film and/or water-repellent particles on the surface to be treated of the target object.

For example, since a water-repellent film formed from fluoroalkylsilane as in Patent Literature 1 and Patent Literature 2 has low adhesiveness, in order to increase the adhesiveness of such a water-repellent film, it is considered necessary to form an adhesive layer (e.g., an oxide film or a film having a hydroxyl group) on the surface to be treated. On the other hand, since the water-repellent agent of the present embodiment has high adhesiveness, such an adhesive layer is not necessarily required. Moreover, since the water-repellent agent of the present embodiment is excellent in adhesiveness and adhesion, the water-repelling function can be maintained for a long time.

Furthermore, it is considered that the water-repellent portion formed from the water-repellent agent of the present embodiment is resistant to adhesion of hydrophilic stains, and that such stains are removed more easily. Therefore, the water-repellent agent is considered to be easy to apply to applications in which hydrophilic stains tend to adhere.

Although the water-repellent film using the above-mentioned conventional PTFE has adhesion and chemical resistance, such a water-repellent film is considered to be easily scratched because it has a low film hardness and is flexible. Moreover, since the temperature for hardening such a water-repellent film is several hundred degrees or more, the locations where such a water-repellent film can be applied and the base material for such a water-repellent film are considered to be limited. On the other hand, the water-repellent portion formed from the water-repellent agent of the present embodiment is considered to be excellent in adhesion and chemical resistance, not be easily scratched, and be less susceptible to limitations on its application locations and base material.

Here, the present inventors speculate that the reason why the water-repellent agent of the present embodiment exhibits excellent water repellency is as follows. It is considered that because the water-repellent agent of the present embodiment contains a polysiloxane compound group, reactions are controlled more easily than, for example, a water-repellent agent containing only a siloxane monomer as a siloxane compound. As a result, it is considered that it is easier to decrease hydrophilic groups (e.g., hydroxyl groups (OH groups)) in the compound forming the water-repellent portion, and that excellent water repellency is exhibited.

Examples of the hydrolyzable functional group include an alkoxy group. Examples of the condensable functional group (excluding the functional group corresponding to the hydrolyzable functional group) include a hydroxyl group, a silanol group, a carboxyl group, and a phenolic hydroxyl group. The hydroxyl group may be contained in a hydroxyl group-containing group such as a hydroxyalkyl group. The polysiloxane compound having a hydrolyzable functional group or a condensable functional group may further have a reactive group different from the hydrolyzable functional group and the condensable functional group (a functional group not corresponding to the hydrolyzable functional group or the condensable functional group). Examples of the reactive groups include an epoxy group, a mercapto group, a glycidoxy group, a vinyl group, an acryloyl group, a methacryloyl group, and an amino group. The epoxy group may be contained in an epoxy group-containing group such as a glycidoxy group. The polysiloxane compound having these functional groups and reactive groups may be used singly or in a mixture of two or more. Among these functional groups and reactive groups, an alkoxy group, a silanol group, and a hydroxyalkyl group can improve the compatibility of the water-repellent agent and can suppress layer separation. Further, from the viewpoint of improving the reactivity of the polysiloxane compound, the number of carbons of the alkoxy group and the hydroxyalkyl group may be, for example, 1 to 6.

Examples of the polysiloxane compound having a hydroxyalkyl group include a compound having a structure represented by the following formula (A). 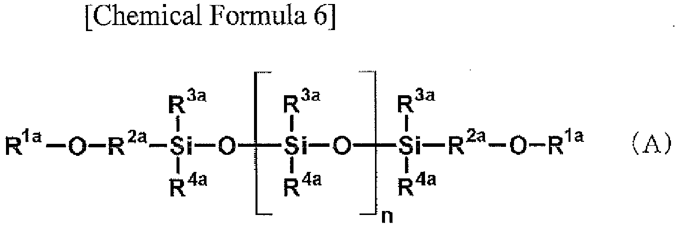 In formula (A), R^{1a} represents a hydroxyalkyl group, R^{2a} represents an alkylene group, R^{3a} and R^{4a} each independently represent an alkyl group or an aryl group, and n represents an integer of 1 to 50. Here, examples of the aryl group include a phenyl group, and a substituted phenyl group. Further, examples of the substituent of the substituted phenyl group include an alkyl group, a vinyl group, a mercapto group, an amino group, a nitro group, and a cyano group. In formula (A), two R^{1a} may be the same as or different from each other, and similarly, two R^{2a} may be the same as or different from each other. In addition, in formula (A), two or more R^{3a} may be the same or different from each other, and similarly, two or more R^{4a} may be the same as or different from each other.

By using a water-repellent agent containing the polysiloxane compound having the above-mentioned structure, it is even easier to obtain excellent water repellency and adhesiveness. From such a viewpoint, in formula (A), examples of R^{1a} include a hydroxyalkyl group in which the number of carbon atoms is 1 to 6; examples of the hydroxyalkyl group include a hydroxyethyl group and a hydroxypropyl group. Further, in formula (A), examples of R^{2a} include an alkylene group in which the number of carbon atoms is 1 to 6; examples of the alkylene group include an ethylene group and a propylene group. In formula (A), examples of R^{3a} and R^{4a} include, each independently, an alkyl group in which the number of carbon atoms is 1 to 6 and a phenyl group; examples of the alkyl group include a methyl group. Further, in formula (A), n may be, for example, 2 to 30, or 5 to 20.

A commercial product can be used as the polysiloxane compound having a structure represented by the above formula (A); examples thereof include compounds such as X-22-160AS, KF-6001, KF-6002, and KF-6003 (all of these being manufactured by Shin-Etsu Chemical Co., Ltd.), and compounds such as XF42-B0970, XF42-C5277, Fluid OFOH 702-4% (all of these being manufactured by Momentive).

Examples of the polysiloxane compound having an alkoxy group include compounds having a structure represented by the following formula (B).

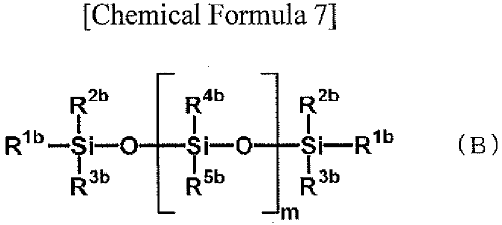

In formula (B), R^{1b} represents an alkyl group, an alkoxy group or an aryl group, R^{2b} and R^{3b} each independently represent an alkoxy group, R^{4b} and R^{5b} each independently represent an alkyl group or an aryl group, and m represents an integer of 1 to 50. Here, examples of the aryl group include a phenyl group and a substituted phenyl group. Further, examples of the substituent of the substituted phenyl group include an alkyl group, a vinyl group, a mercapto group, an amino group, a nitro group, and a cyano group. In formula (B), two R^{1b} may be the same as or different from each other, two R^{2b} may be the same as or different from each other, and similarly two R^{3b} may be the same as or different from each other. In addition, in formula (B), when m is an integer of 2 or more, two or more R^{4b} may be the same or different from each other, and similarly, two or more R^{5b} may also be the same as or different from each other.

By using a polysiloxane compound having the above-mentioned structure or a water-repellent agent containing a hydrolyzate thereof, it is even easier to obtain excellent water repellency and adhesiveness. From such a viewpoint, in formula (B), examples of R^{1b} include an alkyl group in which the number of carbon atoms is 1 to 6, and an alkoxy group in which the number of carbon atoms is 1 to 6; examples of the alkyl group or the alkoxy group include a methyl group, a methoxy group, and an ethoxy group. In formula (B), examples of R^{2b} and R^{3b} include, each independently, an alkoxy group in which the number of carbon atoms is 1 to 6; examples of the alkoxy group include a methoxy group and an ethoxy group. In formula (B), examples of R^{4b} and R^{5b} include, each independently, an alkyl group in which the number of carbon atoms is 1 to 6 and a phenyl group; examples of the alkyl group include a methyl group. In formula (B), m may be, for example, 2 to 30, or 5 to 20.

The polysiloxane compound having a structure represented by the above formula (B) can be obtained by, for example, appropriately referring to the production methods reported in Japanese Unexamined Patent Publication No. 2000-26609, Japanese Unexamined Patent Publication No. 2012-233110, and the like.

In addition, since the alkoxy group is hydrolyzed, the polysiloxane compound having an alkoxy group may be present as a hydrolyzate in the liquid composition, or the polysiloxane compound having an alkoxy group and a hydrolyzate thereof may both be present. Further, in the polysiloxane compound having an alkoxy group, the alkoxy groups in the molecule may all be hydrolyzed or may be partially hydrolyzed.

The polysiloxane compound having a hydrolyzable functional group or a condensable functional group and the hydrolyzate of the polysiloxane compound having a hydrolyzable functional group may be used singly or in a mixture of two or more.

The water-repellent agent of the present embodiment may further contain silica particles from the viewpoint of further improving water repellency and adhesiveness. Specifically, the liquid composition may contain silica particles and at least one selected from the group consisting of a polysiloxane compound having a hydrolyzable functional group or a condensable functional group and a hydrolyzate of the polysiloxane compound having a hydrolyzable functional group. In such a water-repellent agent, the reason why water repellency is improved is thought to be because when the water-repellent agent contains silica particles, in the compound constituting the water-repellent portion, Q+T:D described later can be easily controlled, and it is easy to reduce the amount of hydroxyl groups in the above-mentioned compound.

The silica particles can be used without particular limitation, and examples thereof include amorphous silica particles. Examples of the amorphous silica particles include fused silica particles, fumed silica particles, and colloidal silica particles. Among these, colloidal silica particles are high in monodispersity and easily suppress aggregation in the water-repellent agent.

The shape of the silica particles is not particularly limited, and examples thereof include a spherical shape, a cocoon shape, and associated types. Among these, by using spherical particles as the silica particles, aggregation in the water-repellent agent is more easily suppressed. The average primary particle size of the silica particles may be, for example, from the viewpoint of more easily obtaining a water-repellent film and/or water-repellent particles having an appropriate hardness and the viewpoint of more easily improving durability against thermal shocks and scratches, 1 nm or more, 5 nm or more, or 20 nm or more. The average primary particle size of the silica particles may be, for example, from the viewpoint of more easily obtaining a transparent water-repellent film and/or water-repellent particles, 200 nm or less, 150 nm or less, or 100 nm or less. From these viewpoints, the average primary particle size of the silica particles may be, for example, 1 to 200 nm, 5 to 150 nm, or 20 to 100 nm. The silica particles may be particles having a hollow structure, a porous structure, or the like.

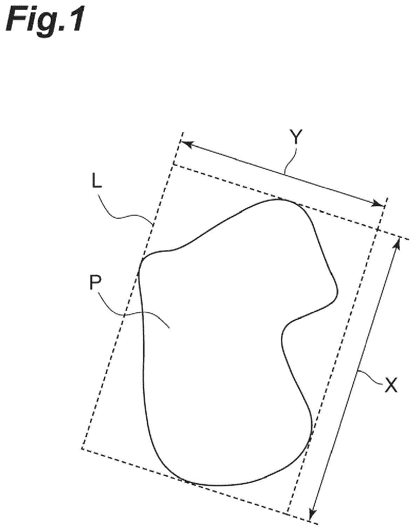

The average particle size of the silica particles can be measured from the raw material. For example, a two-axis average primary particle size is calculated as follows from the result of observing 20 arbitrary particles by SEM. That is, for example, in the case of colloidal silica particles having a solid content concentration of 5 to 40% by mass usually dispersed in water, a chip obtained by cutting a wafer with pattern wiring into 2-cm squares is soaked in a dispersion of the colloidal silica particles for about 30 seconds, then the chip is rinsed with pure water for about 30 seconds, and blown dry with nitrogen. Then, the chip is placed on a sample stage for SEM observation, an acceleration voltage of 10 kV is applied, the silica particles are observed at a magnification of 100000 ×, and an image is photographed. Twenty silica particles are arbitrarily selected from the obtained image, and the average of the particle size of those particles is taken as the average particle size. In this case, when the selected silica particles are a shape as illustrated in Figure 1, a rectangle (circumscribed rectangle L) is derived by circumscribing a silica particle P such that the long side of the rectangle is the maximum possible length. Then, assuming that the long side of the circumscribed rectangle L is X and the short side is Y, the two-axis average primary particle size is calculated as (X+Y)/2, and taken as the particle size of the particle.

The number of silanol groups per g of the above-mentioned silica particles may be, for example, from the viewpoint of having excellent reactivity and easily imparting excellent water repellency and adhesiveness at low temperature and in a short time, 10×10¹⁸ groups/g or more, 50×10¹⁸ groups/g or more, or 100×10¹⁸ groups/g or more. The number of silanol groups per g of the silica particles may be, for example, from the viewpoint of easily suppressing sudden gelation during water-repellency treatment and obtaining a uniform water-repellent film and/or water-repellent particles, 1000×10¹⁸ groups/g or less, 800×10¹⁸ groups/g or less, or 700×10¹⁸ groups/g or less. From these viewpoints, the number of silanol groups per g of the silica particles may be, for example, 10×10¹⁸ to 1000×10¹⁸ groups/g, 50×10¹⁸ to 800×10¹⁸ groups/g, or 100×10¹⁸ to 700×10¹⁸ groups/g.

The content of the silica particles may be, for example, from the viewpoint of improving the reactivity of the water-repellent agent and from the viewpoint of easily imparting excellent water repellency and adhesiveness at low temperature and in a short time, per 100 parts by mass of the total amount of the liquid composition, 0.01 parts by mass or more, 0.1 parts by mass or more, or 0.5 parts by mass or more. The content of the silica particles may be, for example, from the viewpoint of more easily obtaining a water-repellent film and/or water-repellent particles having an appropriate hardness and the viewpoint of more easily improving durability against thermal shocks and scratches, per 100 parts by mass of the total amount of the liquid composition, 30 parts by mass or less, 20 parts by mass or less, or 10 parts by mass or less. From these viewpoints, the content of the silica particles may be, for example, per 100 parts by mass of the total amount of the liquid composition, 0.01 to 30 parts by mass, 0.1 to 20 parts by mass, or 0.5 to 10 parts by mass.

The liquid composition may further include, for example, from the viewpoint of further improving water repellency and adhesiveness, a silicon compound other than the polysiloxane compound (excluding the polysiloxane compound). Specifically, the liquid composition may further contain at least one selected from the group consisting of a silane monomer having a hydrolyzable functional group or a condensable functional group, and a hydrolyzate of the silane monomer having a hydrolyzable functional group (hereinafter, sometimes referred to as "silane monomer group"). The number of silicons in a molecule of the silane monomer can be 1 to 6.

Examples of the silane monomer having a hydrolyzable functional group include, but are not particularly limited to, alkyl silicon alkoxides. Among alkyl silicon alkoxides, an alkyl silicon alkoxide in which the number of hydrolyzable functional groups is 3 or less can further improve water resistance. Examples of such alkyl silicon alkoxides include monoalkyltrialkoxysilanes, monoalkyldialkoxysilanes, dialkyldialkoxysilanes, monoalkylmonoalkoxysilanes, dialkylmonoalkoxysilanes, and trialkylmonoalkoxysilanes. Specifically, examples thereof include methyltrimethoxysilane, methyldimethoxysilane, dimethyldimethoxysilane, and ethyltrimethoxysilane.

Examples of the silane monomer having a condensable functional group include, but are not particularly limited to, silanetetraol, methylsilanetriol, dimethylsilanediol, phenylsilanetriol, phenylmethylsilanediol, diphenylsilanediol, n-propylsilanetriol, hexylsilanetriol, octylsilanetriol, decylsilanetriol, and trifluoropropylsilanetriol.

The silane monomer having a hydrolyzable functional group or a condensable functional group may further have the above-described reactive group different from the hydrolyzable functional group and the condensable functional group.

As a silane monomer in which the number of hydrolyzable functional groups is 3 or less and that has a reactive group, there may also be used vinyltrimethoxysilane, 3-glycidoxypropyltrimethoxysilane, 3-glycidoxypropylmethyldimethoxysilane 3-Methacryloxypropyltrimethoxysilane, 3-methacryloxypropylmethyldimethoxysilane, 3 -acryloxypropyltrimethoxysilane, 3-mercaptopropyltrimethoxysilane, 3-mercaptopropylmethyldimethoxysilane, N-phenyl-3-aminopropyltrimethoxysilane, N-2-(aminoethyl)-3-aminopropylmethyldimethoxysilane, and the like.

Further, as a silane monomer having a condensable functional - group and a reactive group, there may also be used vinylsilanetriol, 3-glycidoxypropylsilanetriol, 3 -glycidoxypropylmethylsilanediol, 3-methacryloxypropylsilanetriol, 3 -methacryloxypropylmethylsilanediol, 3 -acryloxypropylsilanetriol, 3-mercaptopropylsilanetriol, 3-mercaptopropylmethylsilanediol, N-phenyl-3-aminopropylsilanetriol, N-2-(aminoethyl)-3-aminopropylmethylsilanediol, and the like.

In addition, there may also be used bistrimethoxysilylmethane, bistrimethoxysilylethane, bistrimethoxysilylhexane, ethyltrimethoxysilane, vinyltrimethoxysilane, and the like, which are silane monomers in which the number of hydrolyzable functional groups at the molecular ends is 3 or less.

These silane monomers having a hydrolyzable functional group or a condensable functional group, and hydrolyzates of a silane monomer having a hydrolyzable functional group, may be used singly or in a mixture of two or more.

In addition, since the hydrolyzable functional group such as an alkoxy group is hydrolyzed, the silane monomer having a hydrolyzable functional group may be present as a hydrolyzate in the liquid composition, and the silane monomer having a hydrolyzable functional group and a hydrolyzate thereof may both be present. Further, in the silane monomer having a hydrolyzable functional group, the hydrolyzable functional groups in the molecule may all be hydrolyzed or may be partially hydrolyzed.

The content of the polysiloxane compound group (the total of the content of the polysiloxane compound having a hydrolyzable functional group or a condensable functional group and the content of the hydrolyzate of the polysiloxane compound having a hydrolyzable functional group) may be, for example, from the viewpoint of even more easily improving water repellency, per 100 parts by mass of the total amount of the liquid composition, 0.01 parts by mass or more, 0.1 parts by mass or more, or 0.5 parts by mass or more. The content of the polysiloxane compound group may be, for example, from the viewpoint of more easily obtaining a water-repellent film and/or water-repellent particles having an appropriate hardness and the viewpoint of more easily improving durability against thermal shocks and scratches, per 100 parts by mass of the total amount of the liquid composition, 50 parts by mass or less, 30 parts by mass or less, or 10 parts by mass or less. From these viewpoints, the content of the polysiloxane compound group may be, for example, per 100 parts by mass of the total amount of the liquid composition, 0.01 to 50 parts by mass, 0.1 to 30 parts by mass, or 0.5 to 10 parts by mass.

When the water-repellent agent of the present embodiment further contains a silane monomer group in the liquid composition, the ratio between the content of the polysiloxane compound group and the content of the silane monomer group (the total of the content of the silane monomer having a hydrolyzable functional group or a condensable functional group and the content of the hydrolyzate of the silane monomer having a hydrolyzable functional group) may be, for example, from the viewpoint of even more easily improving water repellency and easily obtaining good compatibility, 1:0.1 or more, or 1:1 or more. The ratio between the content of these compounds may be, for example, from the viewpoint of more easily obtaining a water-repellent film and/or water-repellent particles having an appropriate hardness and the viewpoint of more easily improving durability against thermal shocks and scratches, 1:10 or less, or 1:5 or less. From these viewpoints, the ratio between the content of the polysiloxane compound group and the content of the silane monomer group may be, for example, 1:0.1 to 1:10, or 1:1 to 1:5.

The total content of the polysiloxane compound group and the silane monomer group may be, from the viewpoint of even more easily improving of water repellency, per 100 parts by mass of the total amount of the liquid composition, for example, 0.01 parts by mass or more, 0.1 parts by mass or more, or 0.5 parts by mass or more. This total content may be, from the viewpoint of more easily obtaining a water-repellent film and/or water-repellent particles having an appropriate hardness and the viewpoint of more easily improving durability against thermal shocks and scratches, per 100 parts by mass of the total amount of the liquid composition, for example, 60 parts by mass or less, 30 parts by mass or less, 20 parts by mass or less, or 10 parts by mass or less. From these viewpoints, the total content of the polysiloxane compound group and the silane monomer group may be, per 100 parts by mass of the total amount of the liquid composition, for example, 0.01 to 60 parts by mass, 0.01 to 30 parts by mass, 0.1 to 20 parts by mass, or 0.5 to 10 parts by mass. At this time, the ratio of the content of the polysiloxane compound group and the content of the silane monomer group can be in the above range.

The water-repellent agent of the present embodiment may include aerogel particles from the viewpoint of improving water repellency. That is, the liquid composition may contain aerogel particles and at least one selected from the group consisting of a polysiloxane compound having a hydrolyzable functional group or a condensable functional group and a hydrolyzate of the polysiloxane compound having a hydrolyzable functional group. An aerogel is a porous body having nanometer-sized fine pores. Aerogel particles are considered to exhibit excellent water repellency because there are few hydroxyl groups on their surface and because it is difficult for water to enter into the fine pores.

As the aerogel particles, conventionally known aerogel particles can be used without particular limitation, but aerogel particles formed by using as a raw material the polysiloxane compound, the silane monomer, or the like contained in the liquid composition may also be used. Such an aerogel (particles) can be obtained by drying a wet gel which is a condensation product of a sol containing the polysiloxane compound and the like.

The average primary particle size of the aerogel particles may be, from the viewpoint of easily obtaining good water repellency, for example, 0.1 to 10000 nm, 1 to 1000 nm, or 2 to 100 nm.

The content of the aerogel particles may be, from the viewpoint of easily obtaining good dispersibility, per 100 parts by mass of the total amount of the liquid composition, for example, 0.1 to 10 parts by mass, 0.5 to 5 parts by mass, or 0.8 to 3 parts by mass.

The water-repellent agent according to another embodiment may be an aspect including a water-repellent component. The water-repellent component may be, for example, a condensation product of the liquid composition described above. The shape of the water-repellent component according to the present embodiment may be, for example, particulate. Hereinafter, specific aspects of water-repellent agents containing a water-repellent component will be described as second to fourth aspects.

### (Second Aspect)

The water-repellent agent of the present embodiment can include a water-repellent component containing a polysiloxane having a main chain including a siloxane bond (Si-O-Si). The water-repellent component can have the following M unit, D unit, T unit, or Q unit as a structural unit.

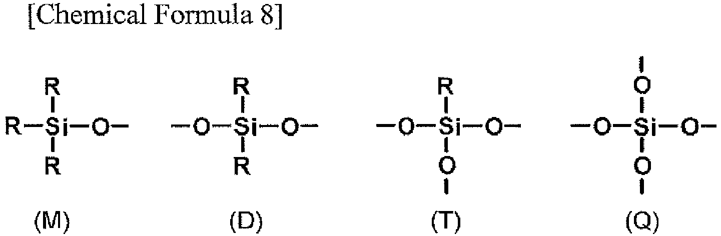

In the above formula, R represents an atom (e.g., a hydrogen atom) or an atomic group (e.g., an alkyl group) bonded to a silicon atom. The M unit is a unit consisting of a monovalent group in which a silicon atom is bonded to one oxygen atom. The D unit is a unit consisting of a divalent group in which a silicon atom is bonded to two oxygen atoms. The T unit is a unit consisting of a trivalent group in which a silicon atom is bonded to three oxygen atoms. The Q unit is a unit consisting of a tetravalent group in which a silicon atom is bonded to four oxygen atoms. Information on the content of these units can be obtained by Si-NMR.

The water-repellent agent of the present embodiment may contain a water-repellent component having, in solid ²⁹Si-NMR spectra as measured by using the DD/MAS method, when the silicon-containing bonding units Q, T, and D are defined as follows, the ratio Q+T:D between the signal area derived from Q and T and the signal area derived from D of 1:0.01 to 1:0.70.

Q: A silicon-containing bonding unit comprising four oxygen atoms that are bonded to one silicon atom.
T: A silicon-containing bonding unit comprising three oxygen atoms and one hydrogen atom or one monovalent organic group that are bonded to one silicon atom.
D: A silicon-containing bonding unit comprising two oxygen atoms and two hydrogen atoms or two monovalent organic groups that are bonded to one silicon atom.

However, the organic group is a monovalent organic group in which an atom bonded to the silicon atom is a carbon atom.

Such a water-repellent agent is excellent in water repellency and adhesiveness.

The ratio Q+T:D between a signal area derived from Q and T and a signal area derived from D may be, for example, 1:0.01 to 1:0.50, 1:0.01 to 1:0.30, 1:0.02 to 1:0.20, or 1:0.03 to 1:0.10. By setting the signal area ratio to 1:0.01 or more, better water repellency tends to be obtained, and by setting the signal area ratio to 1:0.50 or less, better adhesiveness tends to be obtained.

Note that an "oxygen atom" in Q, T, and D as described below is mainly an oxygen atom connecting between two silicon atoms, but, for example, a case where it is an oxygen atom that is possessed by a hydroxyl group and is bonded to a silicon atom is also conceivable. Also, an "organic group" is a monovalent organic group where the atom that is bonded to the silicon atom is a carbon atom. Examples of such a group include an unsubstituted or substituted monovalent organic group in which the number of carbon atoms is 1 to 10. Examples of the unsubstituted monovalent organic group include hydrocarbon groups such as an alkyl group, an alkenyl group, an alkynyl group, a cycloalkyl group, an aryl group, and an aralkyl group. Examples of the substituted monovalent organic group include hydrocarbon groups (substituted organic groups) in which a hydrogen atom of the above-mentioned hydrocarbon groups is substituted by a halogen atom, a predetermined functional group, a predetermined functional group-containing organic group, or the like, or, hydrocarbon groups in which particularly a hydrogen atom of a ring of a cycloalkyl group, an aryl group, an aralkyl group, or the like, is substituted by an alkyl group. Examples of the halogen atoms include a chlorine atom and a fluorine atom (namely, atoms which produce a halogen atom-substituted organic group such as a chloroalkyl group or a polyfluoroalkyl group). Examples of the functional group include a hydroxyl group, a mercapto group, a carboxyl group, an epoxy group, an amino group, a cyano group, an acryloyloxy group, and a methacryloyloxy group. Examples of the functional group-containing organic group include an alkoxy group, an acyl group, an acyloxy group, an alkoxycarbonyl group, a glycidyl group, an epoxy cyclohexyl group, an alkylamino group, a dialkylamino group, an arylamino group, and an N-aminoalkyl substituted aminoalkyl group.

The signal area ratio can be confirmed based on solid ²⁹Si-NMR spectra. In general, the measurement technique for the solid ²⁹Si-NMR spectra is not particularly limited; examples thereof may include a CP/MAS method and a DD/MAS method; in the present embodiment, the DD/MAS method is employed from the viewpoint of quantitativity.

Chemical shifts of the silicon-containing bonding units Q, T, and D in the solid ²⁹Si-NMR spectra are, respectively, observed in the region of -90 to -120 ppm for the Q unit, -45 to -80 ppm for the T unit, and 0 to -40 ppm for the D unit. Therefore, it is possible to separate the signals of the silicon-containing bonding units Q, T, and D, and to calculate the signal area derived from each unit. Note that in analyzing the spectra, it is possible to, from the viewpoint of improving analytical accuracy, employ the exponential function as the Window function and at the same time to set the line broadening coefficient in a range of 0 to 50 Hz.

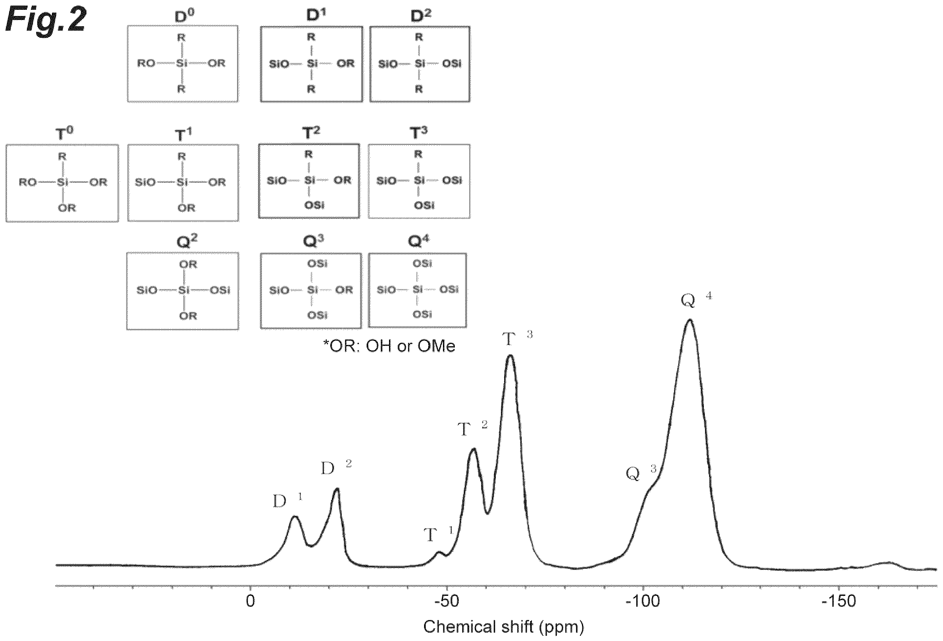

For example, Figure 2 is a diagram illustrating a solid ²⁹Si-NMR spectrum of a water-repellent component contained in a water-repellent agent 12 measured by using the DD/MAS method to be used in the Examples described later. As illustrated in Figure 2, the signals of the silicon-containing bonding units Q, T, and D can be separated based on the solid ²⁹Si-NMR spectra using the DD/MAS method.

Here, the method of calculating the signal area ratio will be described with reference to Figure 2. For example, in Figure 2, the Q unit signal derived from silica is observed in the chemical shift range of -90 to -120 ppm. Also, the T unit signal derived from the polysiloxane compound and the trimethoxysilane reaction product is observed in the chemical shift range of -45 to -80 ppm. In addition, the D unit signal derived from the polysiloxane compound and the dimethyldimethoxysilane reaction product is observed in the chemical shift range of 0 to -40 ppm. Signal areas (integrated values) are obtained by integrating the signals in the respective chemical shift ranges. When the signal area of the sum of the Q unit and the T unit is set as 1, the signal area ratio of Q+T:D in Figure 2 is calculated to be 1:0.15. Note that the signal areas are calculated by using general spectrum analysis software (such as NMR software "TopSpin" manufactured by Bruker (TopSpin is a registered trademark)).

### (Third Aspect)

The water-repellent agent of the present embodiment may contain a water-repellent component including a compound having a structure represented by the following formula (1). The water-repellent component according to the present embodiment can include a compound having a structure represented by the following formula (1a) as a structure including the structure represented by formula (1). For example, the condensation product of the liquid composition including a polysiloxane compound having a structure represented by the above formula (A) can include a water-repellent component including a compound having a structure represented by formula (1) and formula (1a) in its skeleton.

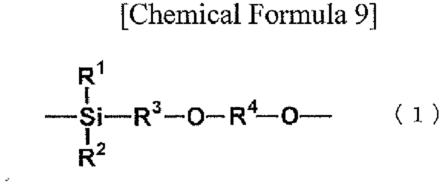

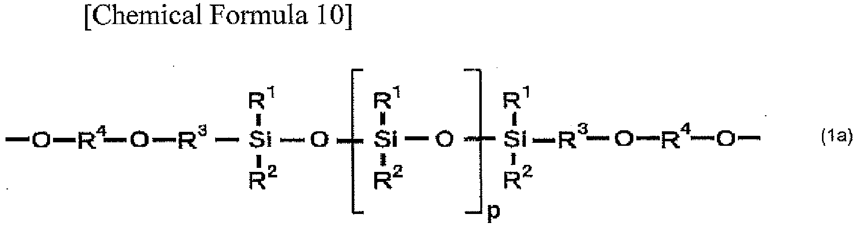

In formulas (1) and (1a), R¹ and R² each independently represent an alkyl group or an aryl group, and R³ and R⁴ each independently represent an alkylene group. Here, examples of the aryl group include a phenyl group and a substituted phenyl group. In addition, examples of a substituent of the substituted phenyl group include an alkyl group, a vinyl group, a mercapto group, an amino group, a nitro group, and a cyano group. p represents an integer of 1 to 50. In formula (1a), two or more R¹ may be the same as or different from each other, and similarly, two or more R² may be the same as or different from each other. In formula (1a), two R³ may be the same as or different from each other, and similarly, two R⁴ may be the same as or different from each other.

When the water-repellent agent contains a water-repellent component including a compound having a structure represented by the above formula (1) or formula (1a), water repellency and the adhesiveness are further improved. From such viewpoint, in formulas (1) and (1a), examples of R¹ and R² include, each independently, represent an alkyl group in which the number of carbon atoms is 1 to 6 and phenyl group; examples of the alkyl group include a methyl group. In formulas (1) and (1a), examples of include, R³ and R⁴ each independently, an alkylene group in which the number of carbon atoms is 1 to 6; examples of the alkylene group include an ethylene group and a propylene group. In formula (1a), for example, p may be 2 to 30, or 5 to 20.

### (Fourth Aspect)

The water-repellent agent of the present embodiment may have a ladder structure comprising strut portions and bridge portions. The bridge portions may contain a water-repellent component including a compound represented by the following formula (2). By including such a compound having a ladder structure in its skeleton, the water-repellent component can further improve water repellency, as well as improve mechanical strength. That is, the water-repellent agent of the present embodiment has excellent water repellency and durability due to the ladder structure. For example, the condensation product of the liquid composition including a polysiloxane compound having a structure represented by the above formula (B) may include a water-repellent component including a compound having in its skeleton a ladder structure having a bridge portion represented by formula (2). In the present embodiment, a "ladder structure" is a structure having two strut portions (struts) and bridge portions (bridges) connecting the strut portions to each other (i.e., a structure having a so-called "*hashigo*" (ladder) form). In this aspect, the ladder structure may be an aspect included in a part of the compound.

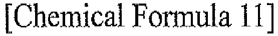

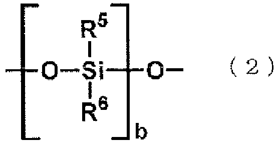

In formula (2), R⁵ and R⁶ each independently represent an alkyl group or an aryl group, and b represents an integer of 1 to 50. Here, examples of the aryl group include a phenyl group and a substituted phenyl group. Further, examples of a substituent of the substituted phenyl group include an alkyl group, a vinyl group, a mercapto group, an amino group, a nitro group, and a cyano group. In addition, in formula (2), when b is an integer of 2 or more, two or more R⁵ may be the same as or different from each other, and similarly, two or more R⁶ may also be the same as or different from each other.

The structure serving as the strut portion and the chain length thereof, and the spacing between the structures serving as the bridge portion, are not particularly limited; however, from the viewpoint of further improving water repellency, mechanical strength, and durability, examples of the ladder structure include the ladder structure represented by the following formula (3).

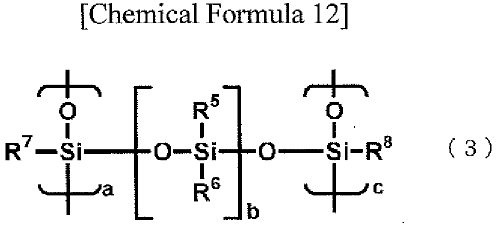

In formula (3), R⁵, R⁶, R⁷, and R⁸ each independently represent an alkyl group or an aryl group, a and c each independently represent an integer of 1 to 3000, and b represents an integer of 1 to 50. Here, examples of the aryl group include a phenyl group and a substituted phenyl group. Further, examples of a substituent of the substituted phenyl group include an alkyl group, a vinyl group, a mercapto group, an amino group, a nitro group, and a cyano group. In addition, in formula (3), when b is an integer of 2 or more, two or more R⁵ may be the same as or different from each other, and similarly, two or more R⁶ may also be the same as or different from each other. Still further, in formula (3), when b is an integer of 2 or more, two or more R⁷ may be the same as or different from each other, and similarly, when c is an integer of 2 or more, two or more R⁸ may be the same as or different from each other.

From the viewpoint of obtaining even better water repellency, in formulas (2) and (3), examples of R⁵, R⁶, R⁷, and R⁸ (wherein R⁷ and R⁸ are only in formula (3)) include, each independently, an alkyl group in which the number of carbon atoms is 1 to 6 and a phenyl group; examples of the alkyl group include a methyl group. In formula (3), a and c may each independently be, for example, 6 to 2000, or 10 to 1000. Further, in formulas (2) and (3), b may be, for example, 2 to 30, or 5 to 20.

From the viewpoint of improving water repellency, the water-repellent component contained in the water-repellent agent may be composed of an aerogel. Since aerogels have a large porosity, it is considered that a water-repellent component (and a water-repellent film and water-repellent particles formed therefrom) composed of an aerogel has a small refractive index and high transparency.

### <Water-repellent structure>

Next, the water-repellent structure obtained using the above-mentioned water-repellent agent is described. In the water-repellent structure of the present embodiment, a water-repellent portion is formed on the surface to be treated; the water-repellent portion includes a dried product of the water-repellent agent. If the water-repellent agent includes a condensation product of the above-mentioned liquid composition, it is considered that the condensation reaction further proceeds when the water-repellent portion is formed; in addition, if the water-repellent agent is the above liquid composition itself, it is considered that a condensation reaction occurs when the water-repellent portion is formed. Therefore, it can be said that the water-repellent portion includes a reaction product of the water-repellent agent.

The water-repellent portion may also be a form including at least one of a water-repellent film and water-repellent particles. The water-repellent structure of the present embodiment has a water-repellent portion including a dried product of the water-repellent agent of the present embodiment, and hence is excellent in water repellency, and the adhesiveness between the surface to be treated and the water-repellent portion is also excellent. Moreover, such a water-repellent structure is also excellent in durability. The water-repellent structure of the present embodiment may be formed by, for example, forming a water-repellent film and/or water-repellent particles on the surface to be treated with the above-mentioned water-repellent agent. Here, a preferable form of the water-repellent portion (water-repellent particles etc.) formed on the surface to be treated may be similar to, for example, the water-repellent component described above.

From the viewpoint of further improving water repellency, the water-repellent portion (a water-repellent film, water-repellent particles, etc.) formed on the surface to be treated may contain an aerogel. That is, for example, the water-repellent film and the water-repellent particles formed on the surface to be treated may respectively be a film containing an aerogel or particles containing an aerogel.

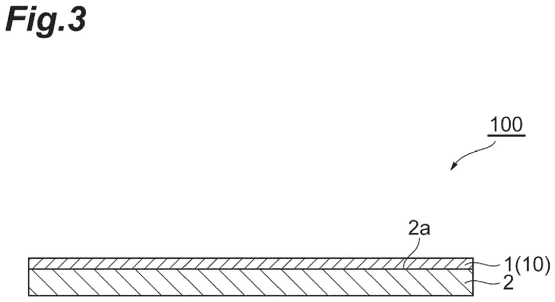

Figure 3 is a diagram schematically illustrating a water-repellent structure according to an embodiment of the present invention. A water-repellent structure 100 illustrated in Figure 3 has a structure in which a water-repellent portion 10 consisting of a water-repellent film 1 is formed on a surface 2a to be treated of the water repellency treatment target object 2. Here, the water-repellent portion 10 includes a dried product of the water-repellent agent of the present embodiment. It is considered that through the inclusion of the water-repellent portion 10 consisting of the water-repellent film 1 on the surface 2a to be treated, the water-repellent structure 100 is imparted with water repellency, which is a chemical property of the water-repellent film. Here, it can be said that the water-repellent portion in the present aspect is not a monolithic film, but is a film formed by deposition of minute water-repellent particles (water-repellent component).

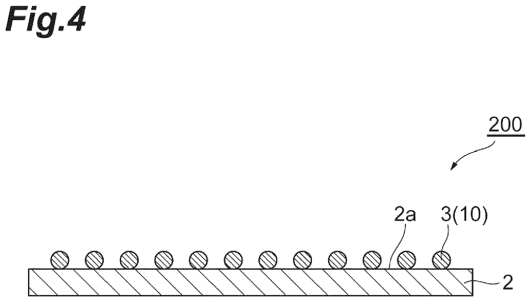

Figure 4 is a diagram schematically illustrating a water-repellent structure according to an embodiment of the present invention. A water-repellent structure 200 illustrated in Figure 4 has a structure in which the water-repellent portion 10 consisting of water-repellent particles 3 is formed on the surface 2a to be treated of the water repellency treatment target object 2. Here, the water-repellent portion 10 includes a dried product of the water-repellent agent of the present embodiment. It is considered that through the inclusion of the water-repellent portion 10 consisting of the water-repellent particles 3 on the surface 2a to be treated, a Lotus effect, which is a physical property of the water-repellent particles, is obtained due to fine uneven shapes, whereby the water-repellent structure 200 is imparted with high water repellency. Here, it can be said that the water-repellent portion in the present aspect is formed by water-repellent particles (water-repellent component) that have grown to a certain size adhering to the surface to be treated.

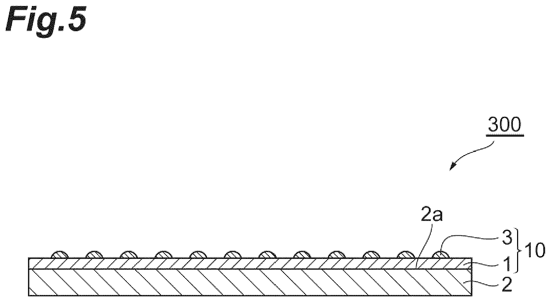

Figure 5 is a diagram schematically illustrating a water-repellent structure according to an embodiment of the present invention. A water-repellent structure 300 illustrated in Figure 5 has a structure in which the water-repellent portion 10 including the water-repellent film 1 and water-repellent particles 3 are formed on the surface 2a to be treated of the water repellency treatment target object 2. Here, the water-repellent portion 10 includes a dried product of the water-repellent agent of the present embodiment. It is considered that through the inclusion of the water-repellent portion 10 including the water-repellent film 1 and the water-repellent particles 3 on the surface 2a to be treated, the water-repellent structure 300 is imparted with water repellency, which is a chemical property of the water-repellent particles, and a Lotus effect, which is a physical property of the water-repellent particles, is obtained due to fine uneven shapes, whereby the water-repellent structure 300 is imparted with even better water repellency.

As especially above, a water-repellent portion having various aspects can be obtained depending on the size of the particles formed from the water-repellent agent. Specifically, when the water-repellent particles are minute, a water-repellent portion is formed in an aspect with a film-like appearance in which the particles have been deposited to a predetermined thickness, and when the water-repellent particles are large to a certain extent, a water-repellent portion is formed in an aspect with a particulate appearance in which the particles are individually arranged in a plane. When minute and large water-repellent particles are both present, a water-repellent portion is formed in an aspect with a composite appearance.

It is also noted that the thermal conductivity of the water-repellent structure of the present embodiment exhibits the same thermal conductivity as that of the target object due to the fact that the water-repellent portion of the water-repellent structure is not a so-called monolithic aerogel film. For example, the thermal conductivity of the water-repellent structure of the present embodiment using a target object having a thermal conductivity of about 1.0 W/(m·K) is about 1.0 W/(m·K), which is the same as the target object.

In the water-repellent structure of the present embodiment, the thickness of the water-repellent film may be, for example, 1 to 500 nm, or 20 to 200 nm. By setting the thickness to 1 nm or more, even better water repellency can be achieved, and by setting the thickness to 500 nm or less, even better adhesiveness can be achieved.

In the water-repellent structure of the present embodiment, the size of the water-repellent particles may be, for example, 0.1 to 10000 nm, or 1 to 1000 nm. By setting the size of the water-repellent particles to 0.1 nm or more, even better water repellency can be achieved, and by setting the size to 10000 nm or less, even better adhesiveness can be achieved.

In the water-repellent structure of the present embodiment, from the viewpoint of achieving even better water repellency, the number of water-repellent particles adhered to the surface to be treated may be, for example, one or more per mm square. The number of water-repellent particles adhering to the surface to be treated can be calculated by using, for example, a scanning electron microscope (SEM). For example, in the case of water-repellent particles having an average particle size of 100 nm, an area A (1.0×10⁻⁴ mm²) of a square having each side having a length 100 times the average particle size (1.0×10⁻² mm) is set. The number B of particles in the square is measured to calculate B/A. This is repeated 10 times, and the obtained average value of B/A is taken as the adhesion amount of particles.

In view of the above, in the water-repellent structure of the present embodiment, the thickness of the water-repellent portion may be, for example, 1 to 10000 nm, or 20 to 1000 nm.

### <Production method of water-repellent agent>

Next, the production method of the water-repellent agent will be described. The production method of the water-repellent agent is not particularly limited, but the water-repellent agent can be produced, for example, by the following method.

The water-repellent agent of the present embodiment can be produced, for example, by a production method mainly comprising a blending step and a condensation reaction step.

Hereinafter, each step of the method for producing the water-repellent agent of the present embodiment will be described.

### (Blending Step)

The blending step is a step of mixing the above-mentioned polysiloxane compound and, optionally, silica particles, silane monomer, solvent, and the like. As a result of this step, a hydrolysis reaction of a silicon compound such as a polysiloxane compound can be performed. The silica particles may be mixed in a dispersion dispersed in a solvent. In this step, an acid catalyst may be further added to the solvent to accelerate the hydrolysis reaction. Further, a surfactant can also be added to the solvent. When using a silicon compound having a condensable functional group, the hydrolysis reaction is not necessarily essential.

Examples of the solvent that can be used include water or a mixed solution of water and alcohols. Examples of the alcohols include methanol, ethanol, n-propanol, 2-propanol, n-butanol, 2-butanol, and t-butanol. From the viewpoint of reducing the interfacial tension with the surface to be treated, the alcohols may have, for example, a low surface tension and a low boiling point. Examples of alcohols in which the surface tension is low and the boiling point is low include methanol, ethanol, and 2-propanol. These may be used singly or in a mixture of two or more.

Examples of the acid catalysts include: inorganic acids such as hydrofluoric acid, hydrochloric acid, nitric acid, sulfuric acid, sulfurous acid, phosphoric acid, phosphorous acid, hypophosphorous acid, bromic acid, chloric acid, chlorous acid, and hypochlorous acid; acid phosphates such as acid aluminum phosphate, acid magnesium phosphate, and acid zinc phosphate; and organic carboxylic acids such as acetic acid, formic acid, propionic acid, oxalic acid, malonic acid, succinic acid, citric acid, malic acid, adipic acid, and azelaic acid. Among these, in consideration of environmental pollution, examples of the acid catalysts capable of accelerating the hydrolysis reaction include organic carboxylic acids. Examples of the organic carboxylic acids include an acetic acid, but formic acid, propionic acid, oxalic acid, malonic acid, or the like can also be used. These may be used singly or in a mixture of two or more.

Use of the acid catalyst accelerates the hydrolysis reaction of the polysiloxane compound and the silane monomer, and thus, allows the hydrolyzed solution to be obtained in a shorter time.

The added amount of the acid catalyst can be, for example, 0.001 to 600.0 parts by mass per 100 parts by mass of the total amount of the polysiloxane compound group and the silane monomer group.

As the surfactant, a non-ionic surfactant, an ionic surfactant, and the like can be used. These may be used singly or in a mixture of two or more.

Examples of the non-ionic surfactant that can be used include compounds containing a hydrophilic portion such as polyoxyethylene and a hydrophobic portion principally consisting of an alkyl group and compounds containing a hydrophilic portion such as polyoxypropylene. Examples of the compounds containing a hydrophilic portion such as polyoxyethylene and a hydrophobic portion principally consisting of an alkyl group include polyoxyethylenenonyl phenyl ether, polyoxyethyleneoctyl phenyl ether, and polyoxyethylene alkyl ether. Examples of compounds containing a hydrophilic portion such as polyoxypropylene include polyoxypropylenealkyl ether and a block copolymer of polyoxyethylene with polyoxypropylene.

Examples of the ionic surfactant include a cationic surfactant, an anionic surfactant, and an amphoteric surfactant. Examples of the cationic surfactant include bromocetyltrimethyl ammonium, and chlorocetyltrimethyl ammonium; Examples of the anionic surfactant include sodium dodecyl sulfonate. Further, examples of the amphoteric surfactant include an amino acid type surfactant, a betaine type surfactant, and an amine oxide type surfactant. Examples of the amino acid type surfactant include acylglutamic acid. Examples of the betaine type surfactant include lauryldimethylaminoacetic acid betaine and stearyldimethylaminoacetic acid betaine. Examples of the amine oxide type surfactant include lauryldimethylamine oxide.

These surfactants are considered to have an action of improving the dispersibility of the polysiloxane compound in the solvent, and on occasion the dispersibility of the silica particles, silane monomer, and the like, in the solvent in the blending step. Further, these surfactants are considered to have an action of reducing differences in chemical compatibility between the solvent in the reaction system and the growing siloxane polymer in the condensation reaction step to be described later, thereby improving dispersibility.

The added amount of the surfactant depends on the kind of the surfactant or on the kinds and amounts of the polysiloxane compound and the silane monomer; however, the added amount thereof may be, for example, per 100 parts by mass of the total amount of the polysiloxane compound group and the silane monomer group, 1 to 100 parts by mass, or 5 to 60 parts by mass.

The hydrolysis in the blending step depends on the kinds and amounts of the polysiloxane compound, the silane monomer, the silica particles, the acid catalyst, the surfactant, and the like in the mixed solution; however, the hydrolysis may, for example, be conducted for 10 minutes to 24 hours under a temperature environment of 20 to 60°C, or for 5 minutes to 8 hours under a temperature environment of 50 to 60°C. By conducting the hydrolysis in this manner, the hydrolyzable functional groups in the polysiloxane compound and the silane monomer are sufficiently hydrolyzed, and the hydrolyzate of the polysiloxane compound and the hydrolyzate of the silane monomer can be obtained more reliably.

In the blending step, a water-repellent agent can be obtained that includes a liquid composition containing at least one selected from the group consisting of a polysiloxane compound having a hydrolyzable functional group or a condensable functional group, and a hydrolyzate of the polysiloxane compound having a hydrolyzable functional group.

### (Condensation reaction step)

In the condensation reaction step, it is possible to perform a condensation reaction of the polysiloxane compound having a condensable functional group, the silane monomer, the hydrolysis reaction product obtained in the blending step, and the like. In this step, a base catalyst can be used to accelerate the condensation reaction. Moreover, in this step, a thermally hydrolyzable compound which generates a base catalyst by thermal hydrolysis can also be added.

Examples of the base catalyst include: alkaline metal hydroxides such as lithium hydroxide, sodium hydroxide, potassium hydroxide, and cesium hydroxide; ammonium compounds such as ammonium hydroxide, ammonium fluoride, ammonium chloride, and ammonium bromide; basic sodium phosphate salts such as sodium metaphosphate, sodium pyrophosphate, and sodium polyphosphate; carbonate salts such as calcium carbonate, potassium carbonate, sodium carbonate, barium carbonate, magnesium carbonate, lithium carbonate, ammonium carbonate, copper(II) carbonate, iron(II) carbonate, and silver(I) carbonate; bicarbonate salts such as calcium bicarbonate, potassium bicarbonate, sodium bicarbonate, and ammonium bicarbonate; aliphatic amines such as allylamine, diallylamine, triallylamine, isopropylamine, diisopropylamine, ethylamine, diethylamine, triethylamine, 2-ethylhexylamine, 3-ethoxypropylamine, diisobutylamine, 3 -(diethylamino)propylamine, di-2-ethylhexylamine, 3 -(dibutylamino)propylamine, tetramethylethylenediamine, t-butylamine, sec-butylamine, propylamine, 3-(methylamino)propylamine, 3-(dimethylamino)propylamine, 3-methoxyamine, dimethylethanolamine, methyldiethanolamine, diethanolamine, and triethanolamine; and nitrogen-containing heterocyclic compounds such as morpholine, N-methylmorpholine, 2-methylmorpholine, piperazine and a derivative thereof, piperizine and a derivative thereof, and imidazole and a derivative thereof. Among these, from the viewpoint of handling safety and odor, carbonate salts or bicarbonate salts s are preferable, and from the viewpoint of economic efficiency, sodium carbonate or sodium bicarbonate is more preferable. The above-described base catalysts may be used singly or in a mixture of two or more.

By using a base catalyst, a dehydration condensation reaction, a dealcoholization condensation reaction, or both reactions of the polysiloxane compound group, the silane monomer group, and the silica particles in the hydrolyzed solution can be accelerated, and the water-repellent agent can be obtained in a shorter time.

The added amount of the base catalyst may be, for example, per 100 parts by mass of the total amount of the polysiloxane compound group and the silane monomer group, 0.1 to 500 parts by mass, or 1.0 to 200 parts by mass. By setting the added amount of the base catalyst to 0.1 parts by mass or more, the condensation reaction can be performed in a shorter time, and by setting the added amount to 500 parts by mass or less, layer separation is suppressed more easily.

The thermally hydrolyzable compound is considered to generate a base catalyst by thermal hydrolysis, causing the reaction solution to become basic, thereby accelerating the condensation reaction. Therefore, the thermally hydrolyzable compound is not particularly limited as long as it is a compound which can make the reaction solution basic after thermal hydrolysis; examples thereof include: urea; acid amides such as formamide, N-methylformamide, N,N-dimethylformamide, acetamide, N-methylacetamide, and N,N-dimethylacetamide; cyclic nitrogen compounds such as hexamethylenetetramine. Among these, it is particularly easy for urea to obtain the above-mentioned acceleration effect.

The added amount of the thermally hydrolyzable compound is not particularly limited as long as it is an amount capable of sufficiently accelerating the condensation reaction. For example, when urea is used as the thermally hydrolyzable compound, the added amount thereof may be, per 100 parts by mass of the total amount of the polysiloxane compound group and the silane monomer group, 1 to 200 parts by mass, or 2 to 150 parts by mass. By setting the added amount to 1 part by mass or more, good reactivity can be obtained more easily, and by setting the added amount to 200 parts by mass or less, layer separation is suppressed more easily.

The reaction in the condensation reaction step may be conducted in a sealed vessel so that the solvent and the base catalyst do not volatilize. The reaction temperature may be, for example, 20 to 90°C, or 40 to 80°C. By setting the reaction temperature to 20°C or more, the condensation reaction can be performed in a shorter time. Further, by setting the reaction temperature to 90°C or less, volatilization of the solvent (particularly alcohols) is more easily suppressed, and as a result the condensation reaction can be performed while suppressing layer separation.

The condensation reaction time depends on the kind of the polysiloxane compound group, the silane monomer group, and the like, and the reaction temperature, but may be, for example, 2 to 480 hours, or 6 to 120 hours. By setting the reaction time to 2 hours or more, even better water repellency and adhesiveness can be achieved, and by setting the reaction time to 480 hours or less, layer separation is suppressed more easily.

In addition, when silica particles are included in the hydrolyzed solution, the condensation reaction time can be further shortened. The reason for this is presumed to be that the silanol group, the reactive group, or both of those groups having the polysiloxane compound group and the silane monomer group in the hydrolyzed solution form a hydrogen bond, a chemical bond, or a combination of such bonds with the silanol group of the silica particles. In this case, the condensation reaction time may be, for example, 10 minutes to 24 hours, or 30 minutes to 12 hours. By setting the reaction time to 10 minutes or more, even better water repellency and adhesiveness can be achieved, and by setting the reaction time to 24 hours or less, layer separation is suppressed more easily.

As a result of the condensation reaction step, a water-repellent agent can be obtained that comprises a condensation product of a liquid composition comprising at least one selected from the group consisting of a polysiloxane compound having a hydrolyzable functional group or a condensable functional group and a hydrolyzate of the polysiloxane compound having a hydrolyzable functional group. In addition, as a result of this step, a water-repellent agent comprising the above-mentioned water-repellent component can be obtained.

The size of the water-repellent particles can be adjusted by changing, for example, the condensation reaction time, the size of the silica particles, the size of the aerogel particles, and the like. This enables a water-repellent structure of a desired aspect to be obtained.

### <Production Method of water-repellent structure>

Next, the production method of the water-repellent structure will be described. The production method of the water-repellent structure is not particularly limited, but the water-repellent structure can be produced, for example, by the following method.

The water-repellent structure of the present embodiment can be produced by, for example, a production method comprising a step of coating a surface to be treated (hereinafter, also referred to as a "coating step") with the above-described water-repellent agent. The production method of the water-repellent structure of the present embodiment may comprise, for example, a coating step and a drying step (aging step), or a coating step, a washing step, and a drying step (pre-drying step and aging step).

Hereinafter, each step of the production method of the water-repellent structure according to one embodiment will be described.

### (Coating step)

The coating step is, for example, a step of coating the surface to be treated with the above-mentioned water-repellent agent. In some cases, after coating the surface to be treated may be dried to volatilize the solvent. For example, by performing this step, a water-repellent portion (a water-repellent film and/or water-repellent particles) can be formed on the surface to be treated. The entire surface to be treated may be coated or a part of the surface to be treated may be selectively coated with the water-repellent agent.

The coating method is not particularly limited, and examples thereof include spin coating, dip coating, spray coating, flow coating, bar coating, and gravure coating. In particular, the spray coating is preferable from the viewpoint of easily forming a water-repellent film having a uniform thickness even on a surface to be treated having irregularities, and the viewpoint of high productivity, and high efficiency of use of the water-repellent agent. These methods may be used singly or in combination of two or more.

The surface to be treated may be coated with the water-repellent agent by coating or impregnating another film, cloth, or the like with the water-repellent agent in advance, and then contacting that coated or impregnated piece with the surface to be treated. The coating method can be freely selected according to the amount of water-repellent agent used, the area and the properties of the surface to be treated, and the like.

The temperature of the water-repellent agent used in the coating step may be, for example, 20 to 80°C, or 40 to 60°C. By setting the temperature to 20°C or more, water repellency and adhesiveness tend to be even better, and by setting the temperature to 80°C or less, the transparency of the water-repellent portion tends to be obtained more easily. The treatment time by the water-repellent agent can be, for example, 0.5 to 4 hours.

Examples of the material constituting the surface to be treated include, but are not specifically limited to, metal, ceramic, glass, plastic, and a material (composite material, laminated material etc.) combining these. The water-repellent agent of the present embodiment can also be applied to paper, fibers, cloth, non-woven fabric, rubber, leather, and the like. When the surface to be treated is dried to volatilize the solvent after coating the surface with the water-repellent agent, the material constituting the surface to be treated may be, for example, a water-soluble organic compound or a water-soluble inorganic compound. Among these, it is preferable that the material constituting the surface to be treated is a transparent material, such as glass or plastic.

Examples of the metal include stainless steel, aluminum, copper, galvanized steel sheet, and iron. Examples of the ceramic include alumina, barium titanate, boron nitride, and silicon nitride. Examples of the glass include normal soda lime glass, borosilicate glass, alkali-free glass, quartz glass, and aluminosilicate glass. Examples of the plastic include acrylic resins such as polymethyl methacrylate, aromatic polycarbonate resins such as polyphenylene carbonate, and aromatic polyester resins such as polyethylene terephthalate (PET).

Examples of the water-soluble organic compound include glucose, sucrose, starch, polyacrylamide, polyvinyl alcohol, and methyl cellulose. Examples of the water-soluble inorganic compound include water glass, sodium chloride, sodium phosphate, sodium carbonate, sodium vanadate, sodium borate, potassium chloride, potassium carbonate, and sulfuric acid compounds.

The adhesiveness of the water-repellent portion can be further improved by, after coating with the water-repellent agent, drying the obtained structure to volatilize the solvent. The drying temperature in this case is not particularly limited, and depends on the heat resistant temperature of surface to be treated; however, the drying temperature may be, for example, 60 to 250°C, or 120 to 180°C. By setting this temperature to 60°C or more, even better adhesiveness can be achieved, and by setting the temperature to 250°C or less, degradation due to heat can be suppressed.

### (Washing step)

The washing step is, for example, a step of washing the structure obtained in the coating step. By performing this step, impurities such as unreacted substances and by-products in the water-repellent portion can be reduced, thereby enabling a higher purity water-repellent portion to be obtained.

The washing step can be, for example, carried out repeatedly using water and/or an organic solvent. At that time, the washing efficiency can be improved by warming.

Examples of the organic solvents that can be used include a variety of organic solvents, such as methanol, ethanol, 1-propanol, 2-propanol, 1-butanol, acetone, methyl ethyl ketone, 1,2-dimethoxyethane, acetonitrile, hexane, toluene, diethyl ether, chloroform, ethyl acetate, tetrahydrofuran, methylenechloride, N,N-dimethylformamide, dimethyl sulfoxide, acetic acid, and formic acid. These organic solvents may be used singly or in a mixture of two or more.

Organic solvents generally have extremely low mutual solubility with water. Therefore, when washing by using an organic solvent after washing with water, an organic solvent having high mutual solubility with water is preferable. Among such organic solvents, examples of the hydrophilic organic solvents include methanol, ethanol, 2-propanol, acetone, methyl ethyl ketone, and 1,2-dimethoxyethane. In addition, methanol, ethanol, methyl ethyl ketone, and the like are preferable in terms of their excellent economic efficiency.

The amount of the water and/or organic solvent used in the washing step may be, for example, an amount that is 3 to 10 times based on the total mass of the water-repellent portion. The washing can be repeated until the water content of the surface to be treated is 10% by mass or less.

The washing temperature may be a temperature equal to or less than the boiling point of the solvent used for washing; for example, when methanol is used, the washing temperature may be about 20 to 60°C. The washing efficiency can also be improved by warming. The washing time may be, for example, 3 to 30 minutes.

### (Drying step: Pre-drying step)

A pre-drying step is, for example, a step of pre-drying the structure washed in the washing step.

The drying technique is not particularly restricted, and a known drying method under atmospheric pressure can be used, for example. The drying temperature depends on the heat resistant temperature of the surface to be treated and the kind of the washing solvent. From the viewpoint of having a sufficiently rapid evaporation rate of the solvent and easily preventing degradation of the water-repellent portion, the drying temperature may be, for example, 20 to 250°C, or 60 to 180°C. The drying time depends on the mass of the water-repellent portion and the drying temperature, but may be, for example, 1 to 24 hours.

### (Drying step: Aging step)

The aging step is a step of, for example, aging (thermally aging, etc.) the water-repellent portion dried in the pre-drying step. As a result of this step, the final water-repellent structure can be obtained. By performing the aging step, the water repellency and adhesiveness of the water-repellent structure are further improved. In the case where the washing step and the pre-drying step are omitted, for example, the water-repellent portion formed in the coating step may be aged.

This step may be performed, for example, as additional drying after the pre-drying step. It is considered that by performing aging, hydrophilic groups in the water-repellent portion are reduced and water repellency is further improved. In addition, when transparency deteriorates due to the water-repellent portion causing volume shrinkage in the pre-drying step, the transparency may be improved by restoring the volume through springing back.

The aging temperature depends on the heat resistant temperature of the surface to be treated, but may be, for example, 100 to 250°C, or 120 to 180°C. By setting the aging temperature to 100°C or more, even better water repellency and adhesiveness can be achieved, and by setting the aging temperature to 250°C or less, degradation due to heat can be suppressed.

The aging time depends on the mass of the water-repellent portion and the aging temperature, but may be, for example, 1 to 10 hours, or 2 to 6 hours. By setting the aging time to 1 hour or more, it is easier to achieve even better water repellency and adhesiveness, and by setting the aging time to 10 hours or less, it is less likely that productivity is reduced.

Although an example of the production method of the water-repellent agent and the water-repellent structure according to the present embodiment have been described above, the production method of the water-repellent agent and the water-repellent structure is not limited to this.

### Examples

The present invention will now be described in more detail by the following Examples, which should not be construed as limiting the present invention.

### (Example 1)

### [Water-repellent Agent 1]

Mixed together were 40.0 parts by mass of carbinol modified siloxane "XF42-5277" (product name, manufactured by Momentive) as a polysiloxane compound, and 6.4 parts by mass of cetyltrimethylammonium bromide (manufactured by Wako Pure Chemical Industries, Ltd.: hereafter abbreviated as "CTAB") as a cationic surfactant, and 51.6 parts by mass of a 100 mM aqueous acetic acid solution, and the mixture was stirred at 25°C for 2 hours. To this was added 2.0 parts by mass of sodium carbonate as a base catalyst, and the resultant was stirred at 60°C for 2 hours to obtain water-repellent agent 1.

### [Water-repellent structure 1]

A slide glass S7213 (product name, manufactured by Matsunami Glass Ind., Ltd.) was dipped in the above water-repellent agent 1, and treated at 60°C for 2 hours. Then, the treated slide glass was dipped in methanol and washed at 25°C for 5 minutes. Then, the slide glass was dipped in methyl ethyl ketone and washed at 25°C for 5 minutes. The washed glass slide was dried at 120°C for 1 hour under normal pressure, and then aged at 150°C for 6 hours to obtain water-repellent structure 1.

### (Example 2)

### [Water-repellent agent 2]

Mixed together were 20.0 parts by mass of a polysiloxane compound A as a polysiloxane compound, 3.2 parts by mass of CTAB as a cationic surfactant, and 75.8 parts by mass of 100 mM aqueous acetic acid solution, and the mixture was stirred at 25°C for 2 hours. To this was added 1.0 part by mass of sodium carbonate as a base catalyst, and the resultant was stirred at 60°C for 2 hours to obtain a water-repellent agent 2.

The "polysiloxane compound A" was synthesized as follows. First, in a 1-liter three-necked flask equipped with a stirrer, a thermometer, and a Dimroth condenser, 100.0 parts by mass of hydroxy-terminated dimethylpolysiloxane "XC96-723" (product name, manufactured by Momentive), 181.3 parts by mass of methyltrimethoxysilane, and 0.50 parts by mass of t-butylamine were mixed and reacted at 30°C for 5 hours. Then, the reaction solution was heated at 140°C for 2 hours under a reduced pressure of 1.3 kPa to remove volatile components, to thereby obtain a biterminally bifunctional alkoxy-modified polysiloxane compound (polysiloxane compound A).

### [Water-repellent structure 2]

A water-repellent structure 2 was obtained in the same manner as in Example 1, except that water-repellent agent 2 was used instead of water-repellent agent 1.

### (Example 3)

### [Water-repellent agent 3]

Mixed together were 10.0 parts by mass of a polysiloxane compound B as a polysiloxane compound and 1.6 parts by mass of CTAB as a cationic surfactant and 87.9 parts by mass of the 100 mM aqueous acetic acid solution, and the mixture was stirred at 25°C for 2 hours. To this was added 0.5 parts by mass of sodium carbonate as a base catalyst, and the resultant was stirred at 60°C for 2 hours to obtain a water-repellent agent 3.

The "polysiloxane compound B" was synthesized as follows. First, in a 1-liter three-necked flask equipped with a stirrer, a thermometer, and a Dimroth condenser, 100.0 parts by mass of XC96-723, 202.6 parts by mass of tetramethoxysilane, and 0.50 parts by mass of t-butylamine were mixed and reacted at 30°C for 5 hours. Then, the reaction solution was heated at 140°C for 2 hours under a reduced pressure of 1.3 kPa to remove volatile components, to thereby obtain a both-end trifunctional alkoxy-modified polysiloxane compound (polysiloxane compound B).

### [Water-repellent structure 3]

A water-repellent structure 3 was obtained in the same manner as in Example 1, except that water-repellent agent 3 was used instead of water-repellent agent 1.

### (Example 4)

Mixed together were 20.0 parts by mass of XF42-5277 as a polysiloxane compound, 3.2 parts by mass of CTAB as a cationic surfactant, and 75.0 parts by mass of a PL-2L solution adjusted to an acetic acid concentration of 100 mM as a raw material containing silica particles (details on PL-2L are described in Table 1, and the raw material containing silica particles is the same below), and the mixture was stirred at 25°C for 2 hours. To this was added 2.0 parts by mass of sodium carbonate as a base catalyst, and the resultant was stirred at 60°C for 2 hours to obtain a water-repellent agent 4.

### [Water-repellent structure 4]

A water-repellent structure 4 was obtained in the same manner as in Example 1, except that water-repellent agent 4 was used instead of water-repellent agent 1.

### (Example 5)

Mixed together were 20.0 parts by mass of the polysiloxane compound A as a polysiloxane compound, 3.2 parts by mass of CTAB as a cationic surfactant and 24.8 parts by mass of the 100 mM aqueous acetic acid solution, and 50.0 parts by mass of the PL-2L solution adjusted to an acetic acid concentration of 100 mM as a raw material containing silica particles, and the mixture was stirred at 25°C for 2 hours. To this was added 2.0 parts by mass of sodium carbonate as a base catalyst, and the resultant was stirred at 60°C for 2 hours to obtain a water-repellent agent 5.

### [Water-repellent structure 5]

A water-repellent structure 5 was obtained in the same manner as in Example 1, except that water-repellent agent 5 was used instead of water-repellent agent 1.

### (Example 6)

Mixed together were 20.0 parts by mass of a polysiloxane compound B as a polysiloxane compound, 3.2 parts by mass of CTAB as a cationic surfactant, and 49.8 parts by mass of 100 mM aqueous acetic acid solution, and 25.0 parts by mass of the PL-5 solution adjusted to an acetic acid concentration of 100 mM as a raw material containing silica particles, and the mixture was stirred at 25°C for 2 hours. To this was added 2.0 parts by mass of sodium carbonate as a base catalyst, and the resultant was stirred at 60°C for 2 hours to obtain a water-repellent agent 6.

### [Water-repellent structure 6]

A water-repellent structure 6 was obtained in the same manner as in Example 1, except that water-repellent agent 6 was used instead of water-repellent agent 1.

### (Example 7)

Mixed together were 20.0 parts by mass of XF42-5277 as a polysiloxane compound, 30.0 parts by mass of methyltrimethoxysilane KBM-13 (product name, manufactured by Shin-Etsu Chemical Co., Ltd.; hereinafter abbreviated as "MTMS") as a silane monomer, 8.0 parts by mass of CTAB as a cationic surfactant and 39.5 parts by mass of the 100 mM aqueous acetic acid solution, and the mixture was stirred at 25°C for 2 hours. To this was added 2.5 parts by mass of sodium carbonate as a base catalyst, and the resultant was stirred at 60°C for 2 hours to obtain a water-repellent agent 7.

### [Water-repellent structure 7]

A water-repellent structure 7 was obtained in the same manner as in Example 1, except that water-repellent agent 7 was used instead of water-repellent agent 1.

### (Example 8)

Mixed together were 10.0 parts by mass of the polysiloxane compound A as a polysiloxane compound, 15.0 parts by mass of MTMS as a silane monomer, 4.0 parts by mass of CTAB as a cationic surfactant and 69.8 parts by mass of the 100 mM aqueous acetic acid solution, and the mixture was stirred at 25°C for 2 hours. To this was added 1.2 parts by mass of sodium carbonate as a base catalyst, and the resultant was stirred at 60°C for 2 hours to obtain a water-repellent agent 8.

### [Water-repellent structure 8]

A water-repellent structure 8 was obtained in the same manner as in Example 1, except that water-repellent agent 8 was used instead of water-repellent agent 1.

### (Example 9)

Mixed together were 5.0 parts by mass of the polysiloxane compound A as a polysiloxane compound, 15.0 parts by mass of MTMS and 5.0 parts by mass of dimethyldimethoxysilane KBM-22 (product name, manufactured by Shin-Etsu Chemical Co., Ltd.; hereinafter abbreviated as "DMDMS") as a silane monomer, 4.0 parts by mass of CTAB as a cationic surfactant and 69.8 parts by mass of the 100 mM aqueous acetic acid solution, and the mixture was stirred at 25°C for 2 hours. To this was added 1.2 parts by mass of sodium carbonate as a base catalyst, and the resultant was stirred at 60°C for 2 hours to obtain a water-repellent agent 9.

### [Water-repellent structure 9]

A water-repellent structure 9 was obtained in the same manner as in Example 1, except that water-repellent agent 9 was used instead of water-repellent agent 1.

### (Example 10)

Mixed together were 10.0 parts by mass of XF42-5277 as a polysiloxane compound, 15.0 parts by mass of MTMS as a silane monomer, 4.0 parts by mass of CTAB as a cationic surfactant and 18.5 parts by mass of the 100 mM aqueous acetic acid solution, and 50.0 parts by mass of an HL-3L solution adjusted to an acetic acid concentration of 100 mM as a raw material containing silica particles, and the mixture was stirred at 25°C for 2 hours. To this was added 2.5 parts by mass of sodium carbonate as a base catalyst, and the resultant was stirred at 60°C for 2 hours to obtain a water-repellent agent 10.

### [Water-repellent structure 10]

A water-repellent structure 10 was obtained in the same manner as in Example 1, except that water-repellent agent 10 was used instead of water-repellent agent 1.

### (Example 11)

Mixed together were 10.0 parts by mass of the polysiloxane compound A as a polysiloxane compound, 15.0 parts by mass of MTMS as a silane monomer, 4.0 parts by mass of CTAB as a cationic surfactant, and 54.2 parts by mass of 100 mM aqueous acetic acid solution, and 14.3 parts by mass of the ST-OZL-35L solution adjusted to an acetic acid concentration of 100 mM as a raw material containing silica particles, and the mixture was stirred at 25°C for 2 hours. To this was added 2.5 parts by mass of sodium carbonate as a base catalyst, and the resultant was stirred at 60°C for 2 hours to obtain a water-repellent agent 11.

### [Water-repellent structure 11]

A water-repellent structure 11 was obtained in the same manner as in Example 1, except that water-repellent agent 11 was used instead of water-repellent agent 1.

### (Example 12)

Mixed together were 1.0 part by mass of the polysiloxane compound A as a polysiloxane compound, 3.0 parts by mass of MTMS as a silane monomer, and 1.0 part by mass of DMDMS, 0.8 parts by mass of CTAB as a cationic surfactant, 88.7 parts by mass of 100 mM aqueous acetic acid solution, and 5.0 parts by mass of the PL-2L solution adjusted to an acetic acid concentration of 100 mM as a raw material containing silica particles, and the mixture was stirred at 25°C for 2 hours. To this was added 0.5 parts by mass of sodium carbonate as a base catalyst, and the resultant was stirred at 60°C for 2 hours to obtain a water-repellent agent 12.

### [Water-repellent structure 12]

A water-repellent structure 12 was obtained in the same manner as in Example 1, except that water-repellent agent 12 was used instead of water-repellent agent 1.

### (Example 13)

### [Water-repellent structure 13]

A slide glass S7213 (product name, manufactured by Matsunami Glass Ind., Ltd.) was dipped at 25°C for 5 minutes in the above-mentioned water-repellent agent 12, the slide glass was then dried at 150°C for 2 hours, and the solvent was volatilized. The dried slide glass was dipped in methanol and washed at 25°C for 5 minutes. Then, the slide glass was dipped in methyl ethyl ketone and washed at 25°C for 5 minutes. The washed slide glass was dried at 120°C for 1 hour under normal pressure, and then aged at 150°C for 6 hours to obtain water-repellent structure 13.

### (Example 14)

### [Water-repellent structure 14]

Water-repellent agent 12 at 25°C was coated onto a treatment surface of a slide glass S7213 (product name, manufactured by Matsunami Glass Ind., Ltd.) with a spray gun (product name: W-50-124 BPG, manufactured by Anest Iwata Corporation) so that the wet thickness was 500 µm, and dried at 150°C for 2 hours to volatilize the solvent. The dried slide glass was dipped in methanol and washed at 25°C for 5 minutes. Then, the slide glass was dipped in methyl ethyl ketone and washed at 25°C for 5 minutes. The washed glass slide was dried at 120°C for 1 hour under normal pressure, and then aged at 150°C for 6 hours to obtain water-repellent structure 14.

### (Example 15)

### [Water-repellent agent 13]

Mixed together were 0.1 parts by mass of the polysiloxane compound A as a polysiloxane compound, 0.3 parts by mass of MTMS as a cationic surfactant, 0.1 parts by mass of DMDMS as a silane monomer, 0.1 parts by mass of CTAB and 98.2 parts by mass of the 100 mM aqueous acetic acid solution, and 1.0 part by mass of the PL-2L solution adjusted to an acetic acid concentration of 100 mM as a raw material containing silica particles, and the mixture was stirred at 25°C for 2 hours. To this was added 0.2 parts by mass of sodium carbonate as a base catalyst, and the resultant was stirred at 60°C for 2 hours to obtain a water-repellent agent 13.

### [Water-repellent structure 15]

A water-repellent structure 15 was obtained in the same manner as in Example 13, except that water-repellent agent 13 was used instead of water-repellent agent 12.

### (Example 16)

### [Water-repellent agent 14]

Mixed together were 10.0 parts by mass of the polysiloxane compound A as a polysiloxane compound, 15.0 parts by mass of MTMS as a silane monomer, 4.0 parts by mass of CTAB as a cationic surfactant, 69.8 parts by mass of 100 mM aqueous acetic acid solution, and 1.2 parts by mass of sodium carbonate as a base catalyst, and the mixture was stirred at 25°C for 6 hours to obtain a water-repellent agent 14.

### [Water-repellent structure 16]

A water-repellent structure 16 was obtained in the same manner as in Example 1, except that water-repellent agent 14 was used instead of water-repellent agent 1.

### (Example 17)

### [Water-repellent agent 15]

Mixed together were 5.0 parts by mass of the polysiloxane compound A as a polysiloxane compound, 15.0 parts by mass of MTMS as a cationic surfactant, 5.0 parts by mass of DMDMS as a silane monomer, 4.0 parts by mass of CTAB and 69.8 parts by mass of the 100 mM aqueous acetic acid solution, and 1.2 parts by mass of sodium carbonate as a base catalyst, and the mixture was stirred at 25°C for 6 hours to obtain a water-repellent agent 15.

### [Water-repellent structure 17]

A water-repellent structure 17 was obtained in the same manner as in Example 1, except that water-repellent agent 15 was used instead of water-repellent agent 1.

### (Example 18)

### [Water-repellent agent 16]

Mixed together were 1.0 part by mass of the polysiloxane compound A as a polysiloxane compound, 3.0 parts by mass of MTMS as a silane monomer, and 1.0 part by mass of DMDMS, 0.8 parts by mass of CTAB as a cationic surfactant, and 88.7 parts by mass of 100 mM aqueous acetic acid solution, 5.0 parts by mass of the PL-2L solution adjusted to an acetic acid concentration of 100 mM as a raw material containing silica particles, and 0.5 parts by mass of sodium carbonate as a base catalyst, and the mixture was stirred at 25°C for 6 hours to obtain a water-repellent agent 16.

### [Water-repellent structure 18]

A water-repellent structure 18 was obtained in the same manner as in Example 1, except that water-repellent agent 16 was used instead of water-repellent agent 1.

### (Example 19)

### [Water-repellent agent 17]

Mixed together were 0.1 parts by mass of the polysiloxane compound A as a polysiloxane compound, 0.3 parts by mass of MTMS as a cationic surfactant, 0.1 parts by mass of DMDMS as a silane monomer, 0.1 parts by mass of CTAB and 98.2 parts by mass of the 100 mM aqueous acetic acid solution, 1.0 part by mass of the PL-2L solution adjusted to an acetic acid concentration of 100 mM as a raw material containing silica particles, and 0.2 parts by mass of sodium carbonate as a base catalyst, and the mixture was stirred at 25°C for 6 hours to obtain a water-repellent agent 17.

### [Water-repellent structure 19]

A water-repellent structure 19 was obtained in the same manner as in Example 1, except that water-repellent agent 17 was used instead of water-repellent agent 1.

### (Example 20)

### [Water-repellent agent 18]

Mixed together were 5.0 parts by mass of the polysiloxane compound A as a polysiloxane compound, 15.0 parts by mass of MTMS and 5.0 parts by mass of DMDMS as a silane monomer, 4.0 parts by mass of CTAB as a cationic surfactant, 69.8 parts by mass of the 100 mM aqueous acetic acid solution, and 1.0 part by mass of IC3100 (product name, manufactured by Cabot) as aerogel particles, and the mixture was stirred at 25°C for 2 hours. To this was added 1.2 parts by mass of sodium carbonate as a base catalyst, and the resultant was stirred at 60°C for 2 hours to obtain a water-repellent agent 18.

### [Water-repellent structure 20]

A water-repellent structure 20 was obtained in the same manner as in Example 1, except that water-repellent agent 18 was used instead of water-repellent agent 1.

### (Example 21)

### [Water-repellent agent 19]

Mixed together were 1.0 part by mass of the polysiloxane compound A as a polysiloxane compound, 3.0 parts by mass of MTMS as a silane monomer, and 1.0 part by mass of DMDMS, 0.1 parts by mass of CTAB as a cationic surfactant, 98.2 parts by mass of 100 mM aqueous acetic acid solution, 1.0 parts by mass of the PL-2L solution adjusted to an acetic acid concentration of 100 mM as a raw material containing silica particles, 1.0 part by mass of IC3100 (product name, manufactured by Cabot) as aerogel particles, and 0.2 parts by mass of sodium carbonate as a base catalyst, and the mixture was stirred at 25°C for 6 hours to obtain a water-repellent agent 19.

### [Water-repellent structure 21]

A water-repellent structure 21 was obtained in the same manner as in Example 1, except that water-repellent agent 19 was used instead of water-repellent agent 1.

### (Comparative Example 1)

### [Comparative water-repellent agent 1]

Mixed together were 30.0 parts by mass of MTMS as a silane monomer, 2.4 parts by mass of CTAB as a cationic surfactant, and 66.1 parts by mass of 100 mM aqueous acetic acid solution, and the mixture was stirred at 25°C for 2 hours. To this was added 1.5 parts by mass of sodium carbonate as a base catalyst, and the resultant was stirred at 60°C for 2 hours to obtain comparative water-repellent agent 1.

### [Comparative water-repellent structure 1]

A comparative water-repellent structure 1 was obtained in the same manner as in Example 1, except that comparative water-repellent agent 1 was used instead of water-repellent agent 1.

### (Comparative Example 2)

### [Comparative water-repellent agent 2]

Mixed together were 20.0 parts by mass of MTMS as a silane monomer, and 15.0 parts by mass of DMDMS, 2.8 parts by mass of CTAB as a cationic surfactant, and 60.5 parts by mass of 100 mM aqueous acetic acid solution, and the mixture was stirred at 25°C for 2 hours. To this was added 1.7 parts by mass of sodium carbonate as a base catalyst, and the resultant was stirred at 60°C for 2 hours to obtain comparative water-repellent agent 2.

### [Comparative water-repellent structure 2]

A comparative water-repellent structure 2 was obtained in the same manner as in Example 1, except that comparative water-repellent agent 2 was used instead of water-repellent agent 1.

### (Comparative Example 3)

### [Comparative water-repellent structure 3]

A comparative water-repellent structure 3 was obtained in the same manner as in Example 13, except that comparative water-repellent agent 2 was used instead of water-repellent agent 12.

### (Comparative Example 4)

### [Comparative water-repellent agent 3]

Mixed together were 30.0 parts by mass of fluoroalkylsilane XC98-B2472 (product name, manufactured by Momentive) as a silane monomer, 2.4 parts by mass of CTAB as a cationic surfactant, and 66.1 parts by mass of 100 mM aqueous acetic acid solution, and the mixture was stirred at 25°C for 2 hours. To this was added 1.5 parts by mass of sodium carbonate as a base catalyst, and the resultant was stirred at 60°C for 2 hours to obtain comparative water-repellent agent 3.

### [Comparative water-repellent structure 4]

A comparative water-repellent structure 4 was obtained in the same manner as in Example 1, except that comparative water-repellent agent 3 was used instead of water-repellent agent 1.

### (Comparative Example 5)

### [Comparative water-repellent structure 5]

A comparative water-repellent structure 5 was obtained in the same manner as in Example 13, except that comparative water-repellent agent 3 was used instead of water-repellent agent 12.

The aspects (kind and content of polysiloxane compound, kind and content of silane monomer, and kind and content of raw material containing silica particles) of the water-repellent agent in each Example and Comparative Example are collectively shown in Table 1. Further, the aspects (kind and treatment method of the water-repellent agent) of the water-repellent structure in each Example and Comparative Example are also collectively shown in Table 2.

**[Table 1]**

| | | Si Raw Material | | Raw Material Containing Silica Particles | | | | | | Aerogel Particles | Solid Content (% by mass) |
|---|---|---|---|---|---|---|---|---|---|---|---|
| | | Kind | Content (parts by mass) | Kind | Silica Particles | | | | | Content (% by mass) | |
| | | | | | Number of Silanol Groups (groups/g) | Kind | Shape | Average Primary Particle Size (nm) | Solid Fraction (% by mass) | | |
| | 1 | XF42-C5277 | 40.0 | - | - | - | - | - | - | - | - |
| | 2 | Polysiloxane compound A | 20.0 | - | - | - | - | - | - | - | - |
| | 3 | Polysiloxane compound B | 10.0 | - | - | - | - | - | - | - | - |
| | 4 | XF42-C5277 | 20.0 | PL-2L | 550×10¹⁸ | colloidal silica | spherical | 20 | 20 | - | 15.0 |
| | 5 | Polysiloxane compound A | 20.0 | PL-2L | 550×10¹⁸ | colloidal silica | spherical | 20 | 20 | - | 10.0 |
| | 6 | Polysiloxane compound B | 20.0 | PL-5L | 190×10¹⁸ | colloidal silica | cocoon | 50 | 20 | - | 5.0 |
| | 7 | XF42-C5277 | 20.0 | - | - | - | | | | | |
| | | MTMS | 30.0 | | | | | | | | |
| | 8 | Polysiloxane compound A | 10.0 | - | - | - | - | - | - | - | - |
| | | MTMS | 15.0 | | | | | | | | |
| | 9 | Polysiloxane compound A | 5.0 | - | - | - | - | - | - | - | - |
| | | MTMS | 15.0 | | | | | | | | |
| | | DMDMS | 5.0 | | | | | | | | |
| | | XF42-C5277 | 10.0 | HL-3L | 150×10¹⁸ | colloidal silica | spherical | 30 | 20 | - | 10.0 |
| | 10 | MTMS | 15.0 | | | | | | | | |
| Water-Repellent Agent | 11 | Polysiloxane compound A | 10.0 | ST-OZL-35 | 60×10¹⁸ | colloidal silica | spherical | 100 | 35 | - | 5.0 |
| | | MTMS | 15.0 | | | | | | | | |
| | 12 | Polysiloxane compound A | 1.0 | PL-2L | 550×10¹⁸ | colloidal silica | spherical | 20 | 20 | - | 1.0 |
| | | MTMS | 3.0 | | | | | | | | |
| | | DMDMS | 1.0 | | | | | | | | |
| | 13 | Polysiloxane compound A | 0.1 | PL-2L | 550×10¹⁸ | colloidal silica | spherical | 20 | 20 | - | 0.2 |
| | | MTMS | 0.3 | | | | | | | | |
| | | DMDMS | 0.1 | | | | | | | | |
| | 14 | Polysiloxane compound A | 10.0 | - | - | - | - | - | - | - | - |
| | | MTMS | 15.0 | | | | | | | | |
| | 15 | Polysiloxane compound A | 5.0 | - | - | - | - | - | - | - | - |
| | | MTMS | 15.0 | | | | | | | | |
| | | DMDMS | 5.0 | | | | | | | | |
| | 16 | Polysiloxane compound A | 1.0 | PL-2L | 550×10¹⁸ | colloidal silica | spherical | 20 | 20 | - | 1.0 |
| | | MTMS | 3.0 | | | | | | | | |
| | | DMDMS | 1.0 | | | | | | | | |
| | 17 | Polysiloxane compound A | 0.1 | PL-2L | 550×10¹⁸ | colloidal silica | spherical | 20 | 20 | - | 0,2 |
| | | MTMS | 0.3 | | | | | | | | |
| | | DMDMS | 0.1 | | | | | | | | |
| | 18 | Polysiloxane compound A | 5.0 | - | - | - | - | - | - | 1.0 | 1.0 |
| | | MTMS | 15.0 | | | | | | | | |
| | | DMDMS | 5.0 | | | | | | | | |
| | 19 | Polysiloxane compound A | 1.0 | PL-2L | 550×10¹⁸ | colloidal silica | spherical | 20 | 20 | 1.0 2.0 | |
| | | MTMS | 3.0 | | | | | | | | |
| | | DMDMS | 1.0 | | | | | | | | |
| Comparative Water-Repellent Agent | | MTMS | 30.0 | - | - | - | - | - | - | - | - |
| | 2 | MTMS | 20.0 | - | - | - | - | - | - | - | - |
| | | DMDMS | 15.0 | | | | | | | | |
| | 3 | X98-B2472 | 30.0 | - | - | - | - | - | - | - | - |

**[Table 2]**

| | | Water-Repellent Agent | | | | | | |
|---|---|---|---|---|---|---|---|---|
| | | Kind | Treatment Method | | | | | |
| | | | Coating Step | | Washing Step | | Drying Step | Aging Step |
| | | | Coating Method | Temperature, Time | Washing Method | Temperature, Time | Temperature, Time | Temperature, Time |
| | 1 | Water-Repellent Agent 1 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | | Water-Repellent Agent 2 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 3 | Water-Repellent Agent 3 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 4 | Water-Repellent Agent 4 | dip coating | 60°C, 2 hours | Dipping in Methanol | 25°C, 5 minutes | 120°C, 1 hour | 150°C, 6 hours |
| Example | | | | | Dipping in Methyl Ethyl Ketone | 25°C, 5 minutes | | |
| | 5 | Water-Repellent Agent 5 | dip coating | 64°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 6 | Water-Repellent Agent 6 | dip coating | 60°C, 2 hours ours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 7 | Water-Repellent Agent 7 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 8 | Water-Repellent Agent 8 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 9 | Water-Repellent Agent 9 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 10 | Water-Repellent Agent 10 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 11 | Water-Repellent Agent 11 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 12 | Water-Repellent Agent 12 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 13 | Water-Repellent Agent 12 | Coating + Drying | Dipping: minutes | Dipping in Methanol | 25°C, 5 minutes | 120°C, 1 hour | 150°C, 6 hours |
| | | | | Drying: 150°C, 2 hours | Dipping in Methyl Ethyl Ketone | 25°C, 5 minutes | | |
| | 14 | Water-Repellent Agent 12 | Spray Coating + Drying | Spraying: 25°C | Dipping in Methanol | 25°C, 5 minutes | 120°C, 1 hour | 150°C, 6 hours |
| | | | | Drying: 150°C, 2 hours | Dipping in Methyl Ethyl Ketone | 25°C, 5 minutes | | |
| | 15 | Water-Repellent Agent 13 | Dip Coating + Drying | Dipping: minutes | Dipping in Methanol | 25°C, 5 minutes | 120°C, 1 hour | 150°C, 6 hours |
| | | | | Drying: 150°C, 2 hours | Dipping in Methyl Ethyl Ketone | 25°C, 5 minutes | | |
| | 16 | Water-Repellent Agent 14 | dip | coating 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 17 | Water-Repellent Agent 15 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 18 | Water-Repellent-Agent 16 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 19 | Water-Repellent Agent 17 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 20 | Water-Repellent Agent 18 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 21 | Water-Repellent Agent 19 | dip coating | | Dipping in Methanol | 25°C, 5 minutes | 120°C, 1 hour | 150°C, 6 hours |
| | | | | | Dipping in Methyl Ethyl Ketone | 25°C, 5 minutes | | |
| | 1 | Comparative Water-Repellent Agent 1 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 2 | Comparative Water-Repellent Agent 2 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 3 | Comparative Water-Repellent Agent 2 | Dip Coating + Drying | Dipping: 25°C, 5 minutes | Dipping in Methanol | 25°C, 5 minutes | 120°C, 1 hour | 150°C, 6 hours |
| Comparative Example | | | | Drying: 150°C, 2 hours | Dipping in Methyl Ethyl Ketone | 25°C, 5 minutes | | |
| | 4 | Comparative Water-Repellent Agent 3 | dip coating | 60°C, 2 hours | Dipping in Methanol | 25°C, 5 minutes | 120°C, 1 hour | 150°C, 6 hours |
| | | | | | Dipping in Methyl Ethyl Ketone | 25°C, 5 minutes | | |
| | 5 | Comparative Water-Repellent Agent 3 | Dip Coating + Drying | Dipping: 25°C, 5 minutes | Dipping in Methanol | 25°C, 5 minutes | 120°C, 1 hour | 150°C, 6 hours |
| | | | | Drying: 150°C, 2 hours | Dipping in Methyl Ethyl Ketone | 25°C, 5 minutes | | |

### [Evaluations]

The water-repellent structure obtained in each Example and Comparative Example were measured or evaluated according to the following conditions. The evaluation results of water contact angle measurement, the abrasion resistance test (in water, in an organic solvent), and measurement of the signal area ratio relating to the silicon-containing bonding units Q, T, and D are collectively shown in Table 3.

### (1) Water contact angle measurement

The water-repellent structure obtained in each Example and Comparative Example and an untreated fiber sheet were dried at 105°C for 1 hour for use as measurement samples. Next, 2 µL of ultrapure water droplets were dropped by using a contact angle meter DMs-401 manufactured by Kyowa Interface Science Co., Ltd., and the contact angle after 5 seconds was measured at room temperature. The measurement was performed five times, and the average value was taken as the water contact angle.

### (2) Abrasion resistance test (in water)

An Abrasion resistance test (in water) was carried out by rubbing a Kimtowel manufactured by Nippon Paper Crecia Co., Ltd. on a sample surface several times in water, and then drying at 105°C for 1 hour for use as a measurement sample. The contact area of the Kimtowel here was 20 mm × 50 mm, with a weight of 0.1 kg/cm². Next, 2 µL of ultrapure water droplets were dropped using a contact angle meter DMs-401 manufactured by Kyowa Interface Science Co., Ltd., and the contact angle after 5 seconds was measured at room temperature. The measurement was performed five times, and the average value was taken as the water contact angle.

### (3) Abrasion resistance test (in organic solvent)

An abrasion resistance test (in organic solvent) was carried out by rubbing a Kimtowel manufactured by Nippon Paper Crecia Co., Ltd. on a sample surface several times in methyl ethyl ketone, and then drying at 105°C for 1 hour for use as a measurement sample. The contact area of the Kimtowel here was 20 mm × 50 mm, with a weight of 0.1 kg/cm². Next, 2 µL of ultrapure water droplets were dropped using a contact angle meter DMs-401 manufactured by Kyowa Interface Science Co., Ltd., and the contact angle after 5 seconds was measured at room temperature. The measurement was performed five times, and the average value was taken as the water contact angle.

### (4) Measurement of signal area ratio relating to silicon-containing bonding units Q, T, and D

Measurement was carried out by using a "FT-NMR AV400WB" (product name, manufactured by Brucker Biospin KK) as a solid ²⁹Si-NMR device. The measurement conditions were, measuring mode: DD/MAS method; probe: CPMAS probe with 4 mm ϕ; magnetic field: 9.4 T; resonance frequency: 79 Hz; MAS rotation speed: 4 kHZ; and delay time: 150 seconds. Sodium 3-trimethylsilylpropionate was used as the standard sample.

As a measurement sample, the water-repellent agent obtained in each example and Comparative Example was subjected to dialysis to remove unreacted substances, and concentrated and dried particles thereof were prepared by using an evaporator; the prepared measurement sample was packed in a rotor made of ZrO₂ and mounted on a probe to carry out the measurement. Also, in the spectrum analysis, the line broadening coefficient was set at 2 Hz, and the obtained signal area ratio relating to the silicon-containing bonding units Q, T, and D, (Q+T:D), was determined.

### (5) Measurement of thermal conductivity

The thermal conductivity was determined from the product of the thermal diffusivity, the constant pressure specific heat capacity, and the density. The thermal diffusivity was measured using a NanoFlash LFA447 manufactured by NETZSCH, the constant pressure specific heat capacity was measured using a DSC Q200 manufactured by TA Instruments, and the density was measured using an electronic densimeter MSD-300 manufactured by Alfa Mirage. The thermal diffusivity and the density were measured at 25°C, and for the constant pressure specific heat capacity measurement, the specific heat capacity at 25°C was also derived by measurement.

**[Table 3]**

| | Water Contact Angle (degrees) | Abrasion Resistance Test (Water Contact Angle (degrees)) | | | | Q+T:D Area Ratio | Thermal Conductivity (W/(m-K)) |
|---|---|---|---|---|---|---|---|
| | | In Water | | In Organic Solvent | | | |
| | | 500 Cycles | 1000 Cycles | 500 Cycles | 1000 Cycles | | |
| No Treatment | 32 | - | - | - | - | - | 1.0 |
| Example 1 | 100 | 100 | 98 | 101 | 100 | 0:1 | 1.0 |
| Example 2 | 105 | 103 | 102 | 6 | 105 | 1:5.00 | 1.0 |
| Example 3 | 102 | 100 | 104 | 102 | 100 | 1:5.00 | 1.0 |
| Example 4 | 110 | 111 | 112 | 110 | 111 | 1:0.67 | 1.0 |
| Example 5 | 113 | 114 | 112 | 111 | 114 | 1:0.42 | 1.0 |
| Example 6 | 113 | 112 | 114 | 111 | 114 | 1:0.67 | 1.0 |
| Example 7 | 108 | 110 | 109 | 108 | 107 | 1:0.22 | 1.0 |
| Example 8 | 110 | 109 | 108 | 110 | 109 | 1:0.17 | 1.0 |
| Example 9 | 109 | 110 | 110 | 108 | 109 | 1:0.19 | 1.0 |
| Example 10 | 116 | 117 | 116 | 115 | 115 | 1:0.13 | 1.0 |
| Example 11 | 118 | 119 | 118 | 119 | 119 | 1:0.13 | 1.0 |
| Example 12 | 122 | 121 | 122 | 122 | 122 | 1:0.15 | 1.0 |
| Example 13 | 123 | 122 | 122 | 123 | 123 | 1:0.15 | 1.0 |
| Example 14 | 124 | 123 | 122 | 122 | 123 | 1:0.15 | 1.0 |
| Example 15 | 122 | 123 | 122 | 124 | 122 | 1:0.12 | 1.0 |
| Example 16 | 101 | 100 | 102 | 102 | 101 | 1:0.13 | 1.0 |
| Example 17 | 100 | 101 | 100 | 100 | 101 | 1:0.15 | 1.0 |
| Example 18 | 110 | 110 | 111 | 111 | 111 | 1:0.12 | 1.0 |
| Example 19 | 111 | 110 | 112 | 112 | 111 | 1:0.12 | 1.0 |
| Example 20 | 110 | 100 | 100 | 101 | 100 | 1:0.18 | 1.0 |
| Example 21 | 122 | 110 | 110 | 112 | 110 | 1:0.16 | 1.0 |
| Comparative Example 1 | 65 | 50 | 41 | 34 | 34 | 1:0 | 1.0 |
| Comparative Example 2 | 70 | 54 | 40 | 34 | 32 | 1:0.75 | 1.0 |
| Comparative Example 3 | 70 | 52 | 39 | 32 | 32 | 1:0.75 | 1.0 |
| Comparative Example 4 | 77 | 77 | 43 | 32 | 33 | 1:0 | 1.0 |
| Comparative Example 5 | 76 | 76 | 45 | 32 | 31 | 1:0 | 1.0 |

From Table 3, all of the water-repellent structures of the examples had a water contact angle of 90 degrees or more, and in the abrasion resistance test, both in water and in an organic solvent, the water contact angle was maintained at 90 degrees or more even after 1000 cycles, and thus it can be seen that water repellency and adhesiveness are excellent. In Table 3, the results listed in the "No Treatment" row indicate the results of water contact angle measurement on an untreated slide glass.

From Table 3, it can be seen that according to the water-repellent agent of the examples, excellent water repellency was imparted to the slide glass.

On the other hand, the water-repellent agents of the Comparative Examples all had a water contact angle of 90 degrees or less, and the water contact angle also decreased in the abrasion resistance test.

The thermal conductivity of the water-repellent structures of the examples and the Comparative Examples was 1.0 W/(m·K). This is considered to be proof that the water-repellent portion of the water-repellent structure is not a so-called monolithic aerogel film.

From the above, it can be seen that the water-repellent agent of the present invention can impart excellent water repellency to the surface to be treated.

### Reference Signs List

L: Circumscribed rectangle, P: silica particle, 1: water-repellent film, 2: water repellency treatment target object, 2a: surface to be treated, 3: water-repellent particles, 10: water-repellent portion, 100, 200, 300: water-repellent structure.

## Claims

1. A water-repellent agent comprising a condensation product of a liquid composition comprising at least one selected from the group consisting of a polysiloxane compound having a hydrolyzable functional group or a condensable functional group and a hydrolyzate of the polysiloxane compound having a hydrolyzable functional group.

2. A water-repellent agent comprising a liquid composition comprising at least one selected from the group consisting of a polysiloxane compound having a hydrolyzable functional group or a condensable functional group and a hydrolyzate of the polysiloxane compound having a hydrolyzable functional group.

3. The water-repellent agent according to claim 1 or 2, wherein the liquid composition further comprises silica particles.

4. The water-repellent agent according to claim 3, wherein a number of silanol groups per g of the silica particles is 10×10¹⁸ to 1000×10¹⁸ groups/g.

5. The water-repellent agent according to any one of claims 1 to 4, wherein the polysiloxane compound comprises a compound represented by the following formula (A): 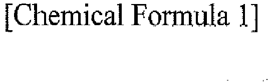 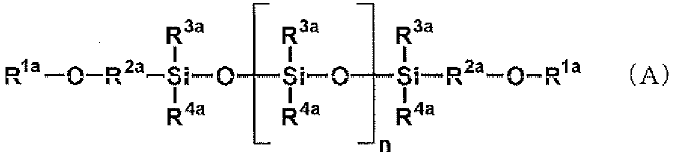 [wherein R^{1a} represents a hydroxyalkyl group, R^{2a} represents an alkylene group, R^{3a} and R^{4a} each independently represent an alkyl group or an aryl group, and n represents an integer of 1 to 50].

6. The water-repellent agent according to any one of claims 1 to 5, wherein the polysiloxane compound comprises a compound represented by the following formula (B): 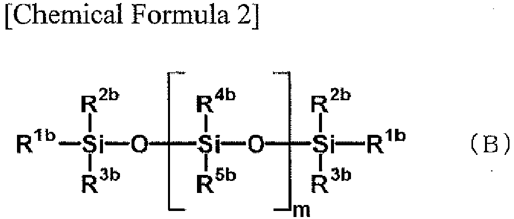 [wherein R^{1b} represents an alkyl group, an alkoxy group or an aryl group, R^{2b} and R^{3b} each independently represent an alkoxy group, R^{4b} and R^{5b} each independently represent an alkyl group or an aryl group, and m represents an integer of 1 to 50].

7. The water-repellent agent according to any one of claims 1 to 6, wherein the liquid composition further comprises at least one selected from the group consisting of a silane monomer having a hydrolyzable functional group or a condensable functional group, and a hydrolyzate of the silane monomer having a hydrolyzable functional group.

8. The water-repellent agent according to any one of claims 1 to 7, wherein the liquid composition further comprises aerogel particles.

9. The water-repellent agent according to any one of claims 1 to 8, wherein the water-repellent agent is used to form a water-repellent portion on a surface to be treated of a target object.

10. The water-repellent agent according to claim 9, wherein the water-repellent portion comprises an aerogel.

11. A water-repellent agent, comprising a water-repellent component having, in a solid ²⁹Si-NMR spectrum as measured using the DD/MAS method, when silicon-containing bonding units Q, T, and D are defined as follows, a ratio Q+T:D between a signal area derived from Q and T and a signal area derived from D of 1:0.01 to 1:0.70, wherein:
Q: A silicon-containing bonding unit comprising four oxygen atoms that are bonded to one silicon atom;
T: A silicon-containing bonding unit comprising three oxygen atoms and one hydrogen atom or one monovalent organic group that are bonded to one silicon atom; and
D: A silicon-containing bonding unit comprising two oxygen atoms and two hydrogen atoms or two monovalent organic groups that are bonded to one silicon atom,
[wherein the organic group is a monovalent organic group in which an atom bonded to the silicon atom is a carbon atom].

12. A water-repellent agent comprising a water-repellent component comprising a compound having a structure represented by the following formula (1): 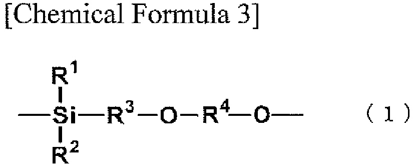 [wherein R¹ and R² each independently represent an alkyl group or an aryl group, and R³ and R⁴ each independently represent an alkylene group].

13. A water-repellent agent comprising a water-repellent component having a ladder structure comprising a strut portion and a bridge portion, wherein the bridge portion comprises a compound represented by the following formula (2): 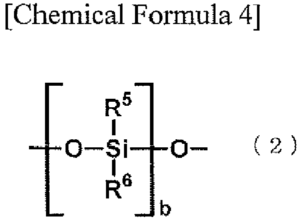 [wherein R⁵ and R⁶ each independently represent an alkyl group or an aryl group, and b represents an integer of 1 to 50].

14. The water-repellent agent according to claim 13, wherein the water-repellent agent comprises the water-repellent component comprising a compound having a structure represented by the following formula (3): 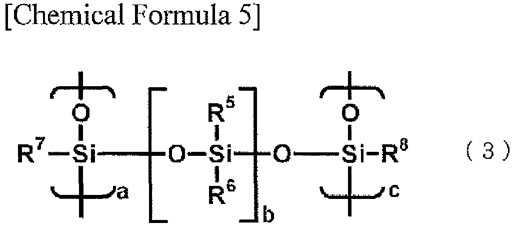 [wherein R⁵, R⁶, R⁷, and R⁸ each independently represent an alkyl group or an aryl group, a and c each independently represent an integer of 1 to 3000, and b represents an integer of 1 to 50].

15. The water-repellent agent according to any one of claims 11 to 14, wherein the water-repellent component is an aerogel.

16. A water-repellent structure, comprising:
a target object; and
a water-repellent portion on a surface to be treated of the target object,
wherein the water-repellent portion comprises a dried product of the water-repellent agent according to any one of claims 1 to 15.

17. A method for producing a water-repellent structure, the method comprising a step of coating a surface to be treated of a target object with the water-repellent agent according to any one of claims 1 to 15.
